# FASCICULE DE BREVET EUROPEEN

(11) **EP 0 296 014 B1**
(45) Date de publication et mention de la délivrance du brevet: **17.03.1993**
(21) Numéro de dépôt: 88401365.7
(22) Date de dépôt: 06.06.1988
(51) Int. Cl.: B64C 27/46, B64C 11/26

(54) **Pale en matériaux composites et son procédé de fabrication**
FVK-Blatt und sein Herstellungsverfahren
Composite blade and its manufacturing procedure

(30) Priorité: 09.06.1987 FR 8707981
(43) Date de publication de la demande: 21.12.1988
(73) Titulaire: AEROSPATIALE Société Nationale Industrielle, 75781 Paris Cédex 16 (FR)
(72) Inventeur: Barbier, Bruno, F-95110 Sannois (FR); Michaud-Soret, Jean Alain, F-75013 Paris (FR)
(74) Mandataire: Lhuillier, René

(56) Documents cités:
- EP-A- 0 061 567
- EP-A- 0 121 462
- GB-A- 2 082 964

## Description

La présente invention concerne des perfectionnements apportés aux pales en matériaux composites telles que celle décrite dans la demande de brevet français N° 83 04 448, déposée le 18 mars 1983 au nom de la Demanderesse.

Plus précisément, l'invention a pour objet une pale, essentiellement en matériaux composites, destinée notamment à l'équipement d'une hélice multipale à pas variable et à pales démontables individuellement, l'hélice étant utilisable, en particulier, comme rotor arrière, de préférence caréné, d'un giravion tel qu'un hélicoptère.

Par la demande de brevet précitée, qui décrit une telle hélice multipale à pas variable, utilisable comme rotor arrière caréné d'hélicoptère, et dont chacune des pales est démontable individuellement, il a déjà été proposé une pale du type comprenant :
- une coque à profil aérodynamique, ayant un revêtement d'extrados et un revêtement d'intrados qui s'étendent du bord d'attaque au bord de fuite de la pale et le long duquel bord de fuite ils se raccordent l'un à l'autre, la coque comportant au moins une couche de tissu de fibres à haute résistance mécanique agglomérées par une résine synthétique d'imprégnation polymérisée, et ayant une extrémité intérieure (destinée à être tournée vers un moyeu lorsque la pale équipe une hélice) conformée en pied de pale,
- un longeron d'axe longitudinal sensiblement parallèle à celui de la pale, et comportant au moins une âme allongée de stratifils de fibres à haute résistance mécanique agglomérés par une résine synthétique polymérisée, la plus grande partie du longeron étant logée dans la coque et fixée par adhérence de sa face d'extrados directement contre la face interne de la partie en regard du revêtement d'extrados de la coque, et une partie d'extrémité intérieure du longeron, sortant de la coque en traversant le pied de pale, formant une partie d'emplanture souple en torsion et flexion, aménagée en boucle qui entoure, par son extrémité interne, une unique douille d'attache, par laquelle la pale est destinée à être individuellement rattachée à un moyeu,
- un remplissage disposé dans la coque, entre les revêtements intrados et extrados et le longeron, et
- un organe de commande du pas de la pale, qui est solidaire du pied de pale et destiné à être monté en rotation sur le moyeu autour de l'axe longitudinal de la pale et à exercer sur la coque un couple de torsion sensiblement centré sur l'axe longitudinal du longeron,
- et une zone de transition qui relie progressivement la partie courante aérodynamiquement profilée de la pale à une embase circulaire de liaison à l'organe de commande du pas et qui comporte un renfort stratifié d'extrados et un renfort stratifié d'intrados.

Dans la pale qui est décrite dans la demande de brevet français n° 83 04448 précitée, le remplissage disposé dans la coque, entre les revêtements et le longeron, est un unique corps de remplissage, en une matière synthétique cellulaire ou en mousse, qui est préformé de manière à pouvoir être disposé dans la coque et qui comporte une découpe s'étendant sur toute sa longueur, et s'ouvrant dans la face du corps tournée vers la partie d'extrados de la coque, tandis que le longeron est constitué par une unique lame allongée de stratifils dont la partie qui est fixée dans la coque est disposée dans le logement délimité par la découpe, de section correspondant sensiblement à celle de la lame, dans le corps de remplissage et la partie d'extrados en regard de la coque, et cette partie de lame par laquelle le longeron est fixé dans la coque étant directement fixée par sa face tournée vers l'extrados contre cette partie d'extrados de la coque.

Une telle réalisation a pour inconvénient que la structure de la pale n'est pas équilibrée, dans la mesure où le longeron est collé, d'une part, par ses faces d'extrémité avant et arrière ainsi que par sa face d'intrados, contre les faces en regard de la découpe du corps de remplissage en mousse et d'autre part, par sa face d'extrados de la pale. Il en résulte que le cisaillement induit de flexion de battement est repris uniquement aux niveaux de deux petites surfaces, sensiblement contenues dans le plan de la corde de la pale, et adjacentes l'une au bord d'attaque et l'autre au bord de fuite de la pale qui, de plus, ne peut être fabriquée que par un moulage comportant au moins deux opérations, savoir le moulage préalable du corps de remplissage à la section de la pale et avec sa découpe, et ensuite le moulage final après dépose successivement de tous les éléments constitutifs de la pale dans deux demi-moules permettant, après assemblage, de polymériser l'ensemble à chaud, comme décrit plus précisément dans la demande de brevet français précitée.

Par le brevet canadien n° 1 197 468, on connaît également une pale comprenant une coque à profil aérodynamique, ayant des revêtements d'extrados et d'intrados qui sont stratifiés et comportent au moins une couche de tissu de fibres à haute résistance mécanique enduit par une résine synthétique d'imprégnation polymérisée, et un longeron d'axe longitudinal sensiblement parallèle à celui de la pale et comportant deux âmes allongées, logées dans la coque et fixées chacune par adhérence de ses faces d'extrados et d'intrados directement contre les faces internes des parties en regard des revêtements d'extrados et d'intrados de la coque.

Mais, dans ce brevet canadien, qui concerne une pale de grandes dimensions, destinée à l'équipement d'une éolienne de grande puissance, la partie courante de la pale est constituée par l'assemblage de trois éléments modulaires, à savoir un module de longeron central, un module de bord d'attaque et un module de bord de fuite. Le module de longeron central constitue la partie centrale, selon la corde de la pale, qui relie le module de bord d'attaque au module de bord de fuite et qui présente, dans sa partie avant, adjacente au module de bord d'attaque, comme dans sa partie arrière, adjacente au module de bord de fuite, des portions de revêtement d'intrados et d'extrados qui sont profilées et raccordées l'une à l'autre par une âme du longeron, constituée d'un remplissage de mousse. Le volume interne au module de longeron, et délimité entre les deux âmes en mousse de ce dernier, est creux, et chaque âme est formée par collage, le long d'un plan de joint, sensiblement confondu avec le plan passant par la corde de la pale, de deux demi-âmes, dont chacune est réalisée avec une partie d'intrados ou une partie d'extrados correspondante du module de longeron. De même, les modules de bord d'attaque et de bord de fuite, qui restent creux, sont constitués chacun par assemblage d'une partie d'intrados et d'une partie d'extrados.

Une telle pale, dont les trois modules constitutifs sont fabriqués séparément, chacun à partir d'une partie d'intrados et d'une partie d'extrados, puis assemblés, et dont les âmes du longeron, en mousse, ne sont absolument pas de nature à pouvoir constituer directement l'organe d'attache de la pale à un moyeu, est donc une pale très différente de celle du type présenté ci-dessus, et déjà connu par la demande de brevet français n° 83 04 448 précitée.

Par l'invention, on se propose de rémédier aux inconvénients, déjà présentés ci-dessus, de la pale connue par la demande de brevet français précitée, et l'invention a pour but de proposer une pale, du type mentionné ci-dessus, dont la structure offre une résistance à la rupture améliorée, augmente la surface résistant au cisaillement induit de flexion de battement, et permet d'obtenir une meilleure qualité de fabrication, liée à la répétitivité du mode opératoire, en particulier pour ce qui concerne la disposition des stratifils constitutifs du longeron, et la possibilité de mouler la pale en une seule opération de moulage, après un assemblage initial de tous les constituants de la pale à l'état humide dans un moule unique, et à l'aide d'une unique étape de polymérisation.

L'invention a également pour but de proposer une pale dont la nouvelle architecture augmente considérablement la résistance aux chocs de l'ensemble de la structure de la pale.

A cet effet, pour que ladite pale soit réalisable en une seule opération de moulage et polymérisable à chaud, opération durant laquelle le longeron est maintenu en traction, ledit longeron est centré sur l'axe longitudinal de la pale passant par le centre de la douille d'attache et chaque faisceau dudit longeron est d'une seule pièce, de section transversale sensiblement rectangulaire et également fixée, dans sa partie logée dans la coque par adhérence de sa face d'intrados directement contre la face interne de la partie en regard du revêtement d'intrados de la coque, ledit remplissage comprenant au moins deux corps de remplissage dont l'un est disposé entre le longeron et le bord d'attaque et l'autre entre le longeron et le bord de fuite, le renfort stratifié d'extrados et le renfort stratifié d'intrados étant constitués chacun d'un empilement de couches de tissus de fibres à haute résistance, agglomérées par une résine synthétique d'imprégnation, polymérisées, insérées entre le revêtement correspondant et le longeron, et présentant une épaisseur progessivement croissante en direction de l'embase circulaire avec laquelle ils sont solidarisés par leur extrémité épanouie et des éléments de remplissage.

Ces avantages sont considérablement renforcés si, selon un premier exemple particulier de réalisation, le longeron est réparti en deux faisceaux, espacés l'un de l'autre dans la coque, s'étendant longitudinalement et de part et d'autre de l'axe de changement de pas de la pale, et coopérant avec les revêtements d'extrados et d'intrados en formant un triple caisson de torsion, le remplissage étant constitué de trois corps de remplissage dont l'un est disposé entre les deux faisceaux du longeron et entre les revêtements d'intrados et d'extrados de la coque, dont un second est un corps de remplissage de bord d'attaque, logé à l'avant du faisceau avant du longeron, et dont le troisième est un corps de remplissage de bord de fuite, logé à l'arrière du faisceau arrière du longeron.

Un avantage supplémentaire et essentiel de cette structure est qu'elle rend possible, comme indiqué ci-dessous, une polymérisation du longeron sous tension, ce qui améliore sa résistance à la rupture, en particulier lorsque les stratifils du longeron sont des stratifils de fibres aramides, telles que le KEVLAR (marque déposée), dont la tenue en traction peut ainsi atteindre jusqu'au double de la valeur obtenue en l'absence de tension.

Dans cet exemple, les trois corps de remplissage peuvent avantageusement être en une matière synthétique légère, cellulaire ou en mousse, selon une réalisation simple et peu coûteuse. Mais, dans ce cas, il est simultanément avantageux que le corps de remplissage de bord d'attaque soit renforcé à l'avant par des nappes de fibres de renforcement agglomérées par une résine synthétique polymérisée, et s'étendant longitudinalement et directement adjacent aux revêtements d'intrados et d'extrados, au niveau du bord d'attaque, les nappes de fibres de renforcement étant de préférence constituées de mèches longitudinales de carbone, afin d'une part d'éviter un "martelage" de bord d'attaque, lors des vols en atmosphère sablonneuse, même si le bord d'attaque est protégé par une coiffe rigide, par exemple en titane, et d'autre part de rigidifier la section de la pale à l'encontre des efforts et moments de battement.

Avantageusement, afin que la coque présente une bonne rigidité en torsion, il est avantageux que la coque soit stratifiée et comprenne, de l'intérieur vers l'extérieur, deux nappes superposées de fibres de carbone imprégnées d'une résine synthétique polymérisée, une couche de tissu de fibres aramides dont les fils de chaîne et de trame sont sensiblement inclinés à 45° sur l'axe longitudinal de la pale, et enfin un film de colle, qui assure un bon état de surface externe de la coque moulée.

Afin que le pied de pale assure une bonne reprise des efforts et moments de battement et de traînée de la pale, et permette l'introduction des moments de commande de changement de pas dans la partie d'emplanture souple en torsion et flexion du longeron, l'embase circulaire du pied de pale est avantageusement constituée par une bride radiale circulaire de solidarisation à l'organe de commande du pas formée par une pluralité de couches radiales de tissus de fibres de verre accolées les unes aux autres et agglomérées par une résine synthétique d'imprégnation polymérisée, des renforts stratifiés d'extrados et d'intrados de la zone de transition entre la partie courante de la pale et ladite bride radiale circulaire se partageant à partir d'une zone de subdivision, chacun en deux parties, dont l'une, radiale interne reste accolée au longeron jusqu'à la bride radiale d'extrémité et dont l'autre, radiale externe restant accolée au revêtement correspondant jusqu'à la bride contre laquelle les couches de la partie externe de chaque renfort sont dirigées radialement, afin de former un collet radial de liaison à la bride, les parties interne et externe de chaque renfort étant séparées l'une de l'autre par un élément de remplissage synthétique tel qu'une mousse de polyuréthane d'épaisseur décroissant progressivement jusqu'à la bride.

Avantageusement, afin permettre une bonne solidarisation de l'organe de commande du pas au pied de pale dans la bride de liaison du pied de pale à l'organe de commande du pas sont retenues, perpendiculairement au plan de la bride, sous forme d'inserts, les extrémités d'organes, tels que des boulons de fixation mécanique d'un palier, équipé de l'organe de commande du pas au pied de pale.

En outre, afin d'éviter la pénétration de poussière ou d'eau dans la coque, au niveau du pied de paie, et le long de la partie d'emplanture du longeron, la bride de laison du pied de pale présente, avantageusement, du côté tourné vers la douille d'attache, un évidement cenral dans lequel est logé un joint d'étanchéité, traversé par une partie frettée du longeron, dans laquelle les deux faisceaux du longeron sont resserés l'un vers l'autre.

Afin que l'organe de commande du pas assure un bon encastrement et un bon guidage en rotation de la pale sur le moyeu, d'une part, et, d'autre part, afin que la pale équipée d'un tel organe de commande de pas soit compatible avec la structure du moyeu de l'hélice décrite dans la demande de brevet français 83 04448, l'organe de commande du pas est avantageusement un palier métallique conforme en manchon traversé axialement par la partie d'emplanture du longeron, et qui porte, en saillie radiale par rapport à son axe et dirigé axiallement vers la douille d'attache, un doigt de commande du pas, et l'extrémité axiale du manchon, du côté opposé à la douille, présente une bride radiale par laquelle le palier est solidarisé au pied de paie. De plus, l'extrémité axiale du palier du côté de la douille peut, dans ce cas présenter également une bride radiale, et chacune des deux brides d'extrémité du palier présent, à sa périphérie, une portée circulaire centrée sur l'axe longitudinal de la pale, et par laquelle le palier est destiné à être monté en rotation dans l'une de deux ouvertures correpondantes ménagées coaxialement dans des parties du moyeu qui sont radialement espacées l'une de l'autre, comme plus particulièrement décrit dans la demande de brevet français précitée.

Selon un second exemple de pale conforme à l'invention, également destinée à être moulée en une seule opération, mais de structure plus massive, la partie du longeron reçue dans la coque est un faisceau unique longitudinal, massif et sensiblement plat, reliant l'un à l'autre les revêtements d'intrados et d'extrados qui comportent chacun une peau externe renforcée intérieurement, à partir du bord d'attaque et jusqu'au-delà du longeron, en direction du bord de fuite, par une semelle de rigidification et la pale en battement, chaque semelle étant stratifiée et constituée de nappes longitudinales de fibres unidirectionnelles de carbone agglomérées par une résine synthétique d'imprégnation polymérisée assurant la liasion par adhérence des facs d'intrados et d'extrados du longeron directement contre les faces internes des semelles correspondantes.

De manière similaire, afin d'augmenter la rigidité de la pale dans le plan de trainée, il est avantageux que les deux corps de remplissage logés dans la coque et de part et d'autre du longeron soient également constitués chacun de nappes longitudinales de fibres unidirectionnelles de carbone agglomérées par une résine synthétique d'imprégnation poymérisée.

Afin que la coque forme un caisson rigide en torsion, et présente un bon état de surface en sortie de moulage, la peau de chaque revêtement est avantageusement stratifiée et constituéee, de l'intérieur vers l'extérieur, de deux couches de tissu de fibres aramides dont les fils de chaîne et de trame sont sensiblement inclinés à 45° par rapport au bord d'attaque, et d'un film de colle assurant le bon état de surface externe.

Afin de favoriser la reprise des efforts et moments de battement et de traînée de la pale, ainsi que l'introduction des efforts de commande de changement du pas dans la partie d'emplanture, l'embase circulaire du pied de paie est conformée en embout tubulaire tronconique, à petite base tournée vers la douille, et, de l'autre côté, une partie de transition qui relie l'embout à la partie courante de la pale, et qui présente une épaisseur progressivement croissante de cette partie courante à l'embout, auquel elle se raccorde au niveau du bord radial interne d'une butée radiale annulaire formée d'un empilement de couches radiales de tissu de fibres de verre agglomérées côte à côte par une résine synthétique d'imprégnation polymérisée, et qui ferme une manchette tronconique et périphérique de l'embout, au niveau de sa grande base. La manchette est également constituée en tissu de fibres de verre, et les extrémités des revêtements de la coque dont la partie de transition recouvrent une frette également constituée en tissu de fibres de verre, qui enserre la portion du longeron traversant le pied de pale, et qui présente une épaisseur progressivement croissante de la partie courante de la pale à l'embout, et se prolonge à l'intérieur de ce dernier, en traversant le passage central de sa butée annulaire, jusqu'à un joint d'étanchéité interne à l'embout et traversé par le longeron.

Le joint d'étanchéité, qui empêche la pénétration dans la coque, au niveau du pied de pale, de corps étrangers déplacés le long du longeron, est entouré dans l'embout par les parties d'extrémité interne des nappes de carbone des deux corps de remplissage et/ou des semelles de renfort, qui se séparent des peaux des revêtements au niveau de la butée radiale de l'embout et entourent la frette dans sa partie engagée dans l'embout, le centrage du joint d'étanchéité dans l'embout étant également assuré par au moins un corps complémentaire de remplissage, en mousse de polyuréthanne, qui est logé contre la butée radiale et contre la face interne de la manchette de l'embout, dans sensiblement la moitié de ce dernier du côté de la partie de transition, et qui est intérieurement doublé par les parties d'extrémité des nappes de carbone, lesquelles doublent intérieurement la manchette dans sensiblement la moitié de cette dernière située du côté de la douille d'attache.

Pour assurer l'encastrement et le guidage en rotation de l'organe de commande du pas de la pale sur un moyeu, ainsi que la compatibilité de la pale équipée de son organe de commande du pas avec le moyeu décrit dans la demande de brevet français précitée, il est avantageux que l'organe de commande du pas soit un palier agencé en fût tubulaire traversé par la partie d'emplanture du longeron, et comprenant, du côté opposé à la douille d'attache, un tronçon de forme tronconique à petite base tournée vers la douille, par lequel le palier est fixé par emmanchement conique et interposition d'un film de colle, sur l'embout tubulaire du pied de pale, le fût comprenant également, du côté de la douille, un tronçon sensiblement cylindrique, de plus petit diamètre que le tronçon tronconique, qui se raccorde à ce dernier par un évasement central sensiblement tronconique, et qui porte en saillie radiale par rapport à son axe un levier de commande de pas. De plus, les extrémités axiales du fût sont chacune avantageusement entourées par une bague frettée sur le fût, qui est destiné à être monté tourillonnant autour de son axe sur deux parties radialement écartées l'une de l'autre d'un moyeu, et dont chacune présente l'une de deux ouvertures circulaires coaxiales, dans lesquelles les bagues frettées du fût sont montées en rotation, d'une manière similaire à celle décrite dans la demande de brevet français précitée.

Avantageusement, dans cet exemple, chaque bague frettée, qui constitue une pièce d'usure, présente une portée périphérique cylindrique constituée par un revêtement en céramique destiné à allonger la durée de vie de la bague. Cette mesure technique permet de protéger les surfaces en contact avec les parties du moyeu dans lesquelles les bagues tourillonnent. En outre, la pale selon cet exemple peut avantageusement comprendre une masse d'équilibrage constitué par une fil métallique noyé dans une résine synthétique logée dans une cavité aménagée sous l'extrémité qui est située du côté de la douille sur la bague à l'extrémité opposée à la douille sur le fût.

Avantageusement, dans les deux exemples de pales présentés ci-dessus, le longeron est constitué de stratifils unidirectionnels de préférence de fibres aramides, enroulés en écheveau sur deux douilles de façon à réaliser deux faisceaux parallèles contournant les douilles par une boucle. L'une des extrémités de cet écheveau formée d'une certaine longueur des deux faisceaux parallèles et de leur enroulement sur la douille correspondante constitue la partie d'emplanture du longeron et son dispositif d'attache sur le moyeu, alors que l'autre extrémité de l'écheveau formée du reste de la longueur des deux faisceaux parallèles avant leur enroulement sur la seconde douille constitue la partie du longeron reçue dans la coque.

Cette constitution et disposition en écheveau des stratifils du longeron, permet un alignement naturel de très bonne qualité des fibres aramides dans la partie formant la boucle qui entoure la douille d'attache et, dans son prolongement, jusqu'aux extrémités des portions du longeron reçues dans la coque de façon à ce que les dites fibres soient intéressées de façon uniforme par les efforts et moments qui sollicitent le longeron.

Avantageusement, dans la pale selon le premier exemple présenté ci-dessus, les deux faisceaux de stratifils du longeron sont frettés dans leur portion traversant le pied de pale, entre la partie d'emplanture en boucle et les parties qui sont engagées et maintenues écartées l'une de l'autre dans la coque, de façon à former chacune l'une des deux branches du longeron.

Dans le second exemple de pale présenté ci-dessus, les deux faisceaux de stratifils du longeron sont également frettés l'un contre l'autre par leur portion traversant le pied de pale, entre la partie d'emplanture en boucle et les parties qui sont engagées et maintenues dans la coque, mais ces dernières sont appliquées l'une contre l'autre dans la coque, de façon à former le longeron en branche unique.

Avantageusement de plus, les faisceaux de stratifils du longeron présentent dans leur partie d'emplanture en boucle, une épaisseur, mesurée parallèlement à l'axe de la douille d'attache, qui augmente progressivement du pied de pale à la douille, et présentant par ailleurs, perpendiculairement aux axes de la douille et de la pale, une largeur qui diminue progressivement du pied de pale à la douille, ces évolutions de largeur et d'épaisseur des faisceaux étant telles que la section reste constante. Cette forme géométrique du longeron, dans sa partie d'emplanture, combinée au faible module de cisaillement des stratifils unidirectionnels de fibres aramides qui le constituent assurent une bonne souplesse en torsion de la partie d'emplanture.

Enfin, la structure de la pale est complétée par la présence d'une coiffe rigide de protection du bord d'attaque, qui est intégrée à la coque, et qui peut être métallique, par exemple en tôle de titane, ou, selon une caractéristique propre à l'invention, en polyuréthane moulé, qui permet d'obtenir avec précision le profil extérieur de la pale et qui présente une excellente tenue à l'érosion au sable.

L'invention a également pour objet un procédé de fabrication de la pale, au moyen d'un demi-moule inférieur et d'un demi-moule supérieur dont les empreintes complémentaires ont respectivement la forme de la partie d'intrados et de la partie d'extrados de la pale.

Comme cela est déjà connu par la demande de brevet français précitée, ce procédé consiste :
- à déposer dans le demi-moule inférieur, un volet de chacune des couches de tissu et nappes de fibres à haute résistance mécanique imprégnées d'une résine synthétique polymérisable, et destinées à constituer le revêtement d'intrados de la coque de la pale,
- à mettre en place, par dessus ces volets, les matériaux constitutifs des corps de remplissage, et, dans la zone du pied de pale, les couches de tissu et/ou nappes de fibres de renfort, imprégnées d'une résine synthétique polymérisable, de la partie d'intrados de la coque,
- à mettre en place, par dessus ces volets et couches de tissu et/ou nappes de fibres de renfort de la partie d'intrados de la pale, et entre ces corps de remplissage, l'écheveau de stratifils de fibres aramides agglomérées par une résine synthétique polymérisable et enroulés sur deux douilles d'extrémités, de façon à former le longeron de la pale, d'une part dans sa partie d'emplanture comportant une des deux douilles sur laquelle est enroulé l'écheveau et une certaine longueur des deux faisceaux de part et d'autre de la douille, et d'autre part le reste de la longueur des deux faisceaux constituant la partie du longeron reçue dans la coque,
- à mettre en place, dans la zone du pied de pale et par-dessus le longeron, les couches de tissu et/ou nappes de fibres de renfort imprégnées d'une résine synthétique polymérisable de la partie d'extrados de la coque,
- à disposer sur l'ensemble ainsi formé dans le demi-moule inférieur un volet de chacune des couches de tissu et nappes de fibres à haute résistance mécanique imprégnées d'une résine synthétique polymérisable qui sont destinées à constituer le revêtement d'extrados de la coque,
- à mettre en place les couches de tissu de la frette des butée et manchette ou de la bride radiale du pied de pale et les éléments complémentaires de remplissage en mousse de polyuréthane dans les parties d'intrados et d'extrados de la pale, respectivement avant et après la mise en place de l'écheveau de stratifils du longeron,
- et à placer le demi-moule supérieur sur le demi-moule inférieur, et à fermer le moule puis à polymériser la ou les résines imprégnant et/ou agglomérant les éléments renfermés dans le moule, de manière à mouler la pale en une seule opération.

Mais de plus, selon une caractéristique propre à l'invention, le procédé consiste, avant la polymérisation, à mettre l'écheveau de stratifils constituant le longeron en traction longitudinale, sensiblement parallèlement à l'axe longitudinal de la pale, et à maintenir la mise en tension des stratifils pendant toute la polymérisation.

Cette polymérisation sous tension à pour conséquence remarquable que cette tension se répartit uniformément dans les stratifils de telle sorte qu'étant tous soumis aux mêmes contraintes, ils offrent ainsi une meilleure résistance à la rupture et de telle sorte que la répétitivité du mode opératoire permet de garantir la constance de meilleure qualité.

Ceci peut être assuré de manière simple en utilisant, pour constituer le longeron, l'écheveau de stratifils formant une boucle fermée et allongée, qui est disposée dans le moule de sorte que sa partie d'extrémité du côté opposé à celle qui entoure la douille d'attache, s'étende longitudinalement en saillie au-delà des empreintes des demi-moules et entoure une douille de tension retenue sur un pion monté dans l'un au moins des demi-moules, et le procédé selon l'invention consiste également, après polymérisation et démoulage, à découper la partie excédentaire du longeron avec, éventuellement, une partie du bout de la coque et des corps de remplissage.

Enfin, pour assurer un bon état de surface de la coque en sortie de moulage, le procédé consiste en outre avantageusement à étendre initialement un film de colle dans les parties des empreintes des demi-moules qui correspondent à la coque de la pale.

La présente invention sera mieux comprise, et d'autres avantages et caractéristiques de l'invention ressortiront de la description donnée ci-après, à titre non limitatif, de deux exemples particuliers de réalisation décrits en référence aux dessins annexés sur lesquels :
la figure 1 représente une vue en perspective d'un exemple de pale sortie de moulage,
la figure 2 est une vue en coupe transversale de la pale de la figure 1, dans sa partie courante,
la figure 3 est une vue en plan de la pale de la figure 1, avec arrachement partiel de son revêtement au bout de pale,
les figures 4a, 4b, 4c représentent trois coupes transversales selon respectivement IVA-IVa, IVb-IVb et IVc-IVc de la figure 3, et montrent l'évolution du profil de la pale de son pied à son bout,
la figure 5 est une vue en demi-coupe longitudinale partielle selon V-V de la figure 3,
la figure 6 est une vue partielle en coupe longitudinale du pied de pale,
la figure 7 est une vue partielle en élévation latérale du pied de pale et de la partie d'emplanture du longeron,
la figure 8 est une vue en plan de la pale de la figure 1 équipée d'un palier métallique équipé pour la commande du pas.
la figure 9 est un schéma illustrant le procédé de moulage dans deux demi-moules complémentaires et en une seule opération de la pale de la figure 1,
la figure 10 représente schématiquement l'étape finale de fabrication de la pale de la figure 1,
la figure 11 est une vue en perspective d'un autre exemple de pale sortie de moulage,
la figure 12 est une vue en coupe transversale de la pale de la figure 11 dans sa partie courante,
la figure 13 est une vue partielle en coupe longitudinale du pied de la pale des figures 11 et 12,
la figure 14 est une vue en élévation latérale représentant le palier équipé de la commande du pas de la pale des figures 11 à 13,
la figure 15 est une vue en plan de la pale de la figure 11 équipée du palier de la figure 14, et
la figure 16 est une vue schématique de l'encastrement et du montage en rotation de la pale par son palier sur un moyeu.

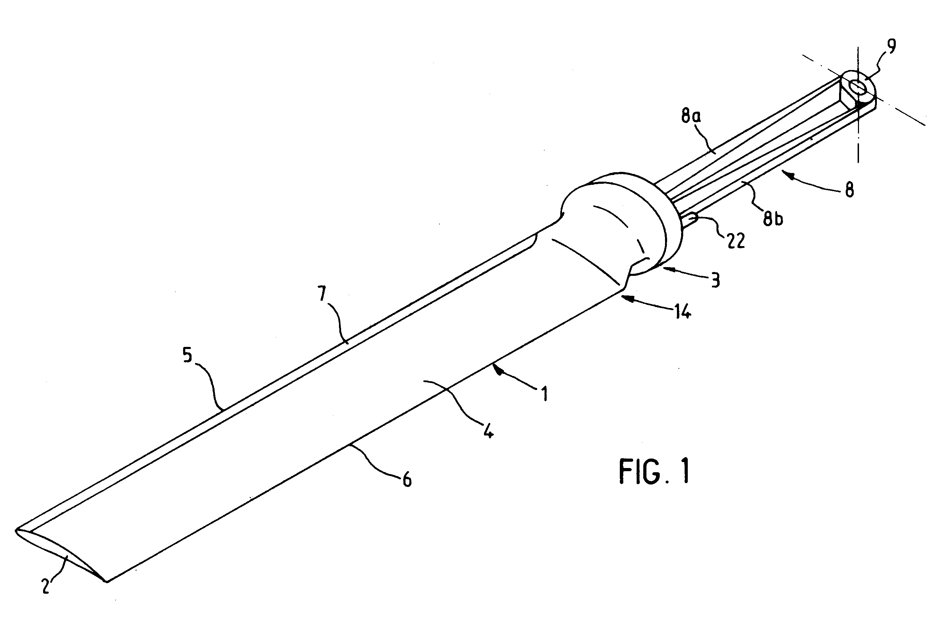

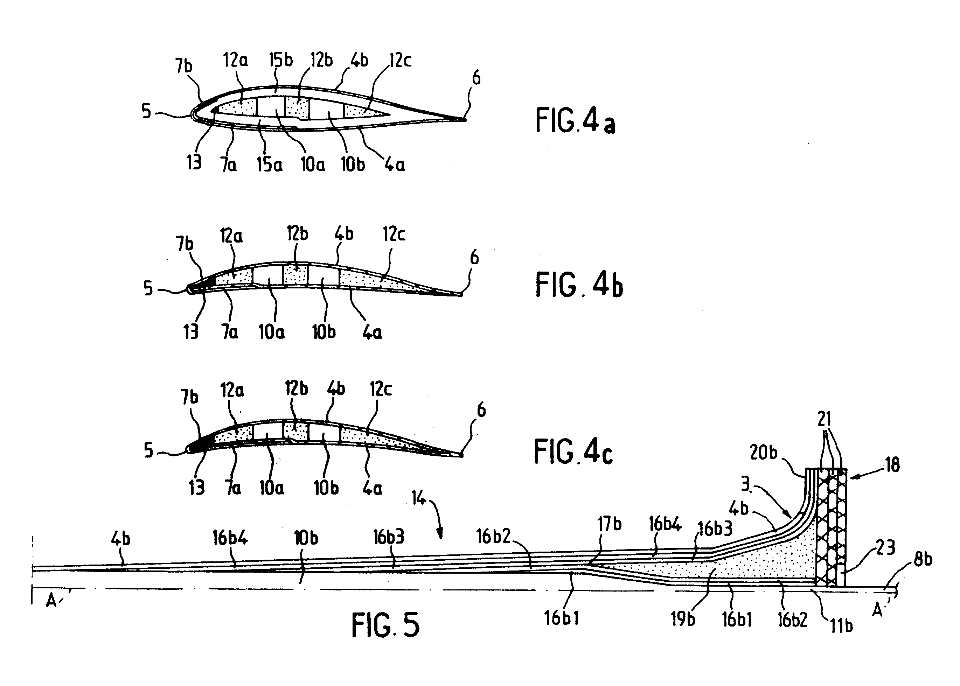

La pale destinée à un rotor arrière d'hélicoptère, du type caréné, et essentiellement réalisée en matériaux composites, telle que sortie d'un moulage en une seule opération et représentée sur la figure 1, comprend dans sa partie courante 1, qui s'étend du bout de pale 2 (à son extrémité externe, du côté opposé à celui par lequel la pale est rattachée à un moyeu) à un pied de pale 3 (du côté interne, vers le moyeu), une coque 4 ayant la forme du profil aérodynamique souhaité, qui est un profil évolutif suivant l'envergure, par exemple du type décrit ci-dessous en référence aux figures 4a à 4c.

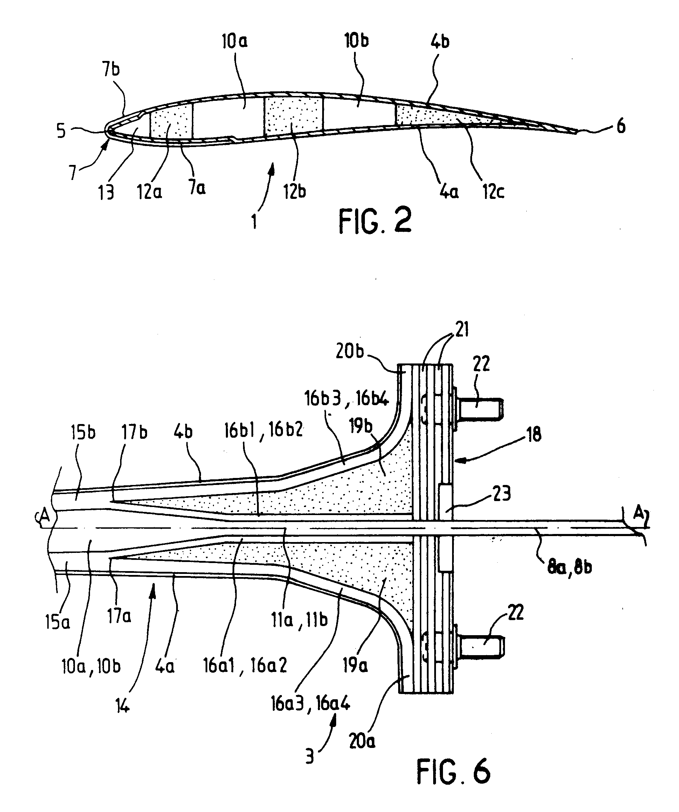

La coque 4, qui enveloppe des corps de remplissage et le longeron plus particulièrement décrits ci-dessous en référence aux figures 2 à 4c, est une coque dont les revêtements d'intrados 4a et d'extrados 4b, s'étendant de façon continue du bord d'attaque 5 au bord de fuite 6, le long duquel bord de fuite ces revêtements se raccordent l'un à l'autre, forment une peau stratifiée constituée par un empilement comprenant, de l'intérieur vers l'extérieur, deux nappes superposées de fibres de carbone, s'étendant longitudinalement et sensiblement parallèlement au bord d'attaque 5 ou à l'axe longitudinal de changement de pas de la pale, et une couche de tissu de fibres aramides, par exemple de KEVLAR®, disposée de sorte que les fils de chaîne et de trame, croisés à angle droit les uns avec les autres, sont inclinés à environ 45° sur la direction du bord d'attaque 5 ou de l'axe longitudinal de la pale, l'ensemble de ces deux nappes et de cette couche étant aggloméré par une résine synthétique d'imprégnation polymérisée par thermodurcissage, de façon à former un caisson assurant la rigidité en torsion de l'ensemble de la pale, ce caisson étant recouvert extérieurement d'un film de colle qui assure un bon état de surface externe de la coque 4 en sortie de moulage. La pale de la figure 1 comporte également une coiffe 7 de protection du bord d'attaque 5, de section en forme de U (voir figure 2) dont l'aile d'intrados 7a s'étend plus loin à partir du bord d'attaque 5 et vers le bord de fuite 6 que l'aile d'extrados 7b, la coiffe 7 s'étendant, selon l'envergure, de la zone de transition par laquelle la partie courante 1 se rattache au pied de pale 3, jusqu'au bout de pale 2, et la coiffe 7 étant intégrée à la coque 4 et réalisée en tôle de titane, pour protéger la pale des éléments naturels érosifs que sont l'eau et le sable, ou même en polyuréthane, qui présente une meilleure tenue à l'érosion au sable, et dont la réalisation en pièce moulée permet d'obtenir avec précision le profil externe de la pale, avec une épaisseur de protection qui, à l'image du spectre d'érosion, est plus importante au niveau du bord d'attaque 5 que sur les ailes 7a et 7b.

La pale de la figure 1 comprend également une partie d'emplanture 8, rigide en direction longitudinale et souple en torsion et en flexion, qui est conformée en boucle entourant une douille 9 d'attache au moyeu (non représenté ). Cette douille 9 est une pièce tubulaire monobloc, par exemple en alliage léger, qui permet la fixation de la pale sur un moyeu, tel que celui décrit dans la demande de brevet français précitée n°83 04 448, à laquelle on se reportera avantageusement pour de plus amples précisions sur la structure du moyeu de l'hélice multipale, cette fixation étant assurée par un boulon dont la tige passe dans l'alésage central de la douille 9 positionnée de sorte que son axe soit par exemple parallèle à l'axe de rotation du moyeu.

La partie d'emplanture 8, qui entoure la douille métallique 9 en étant enroulée dans une gorge autour de cette douille, est formée par la partie d'extrémité interne d'un longeron, constitué d'un unique écheveau allongé de stratifils unidirectionnels de KEVLAR agglomérés par une résine synthétique d'imprégnation polymérisée par thermodurcissage, de telle sorte que les deux parties d'extrémité 10a et 10b, qui s'étendent sur environ les deux tiers de la longueur de l'écheveau sont reçues dans la coque 4, tandis que la partie médiane dudit écheveau, s'étendant sur environ un tiers de sa longueur constitue la portion d'emplanture 8 en forme de boucle passant autour de la douille 9 et dont les deux faisceaux 8a et 8b se prolongent chacun par l'une des parties d'extrémité respectivement 10a et 10b du longeron.

Comme représenté sur les figures 2, 3 et 4a à 4c le longeron est réalisé de sorte que les deux parties 10a et 10b soient de section transversale sensiblement rectangulaire et forment deux faisceaux parallèles l'un à l'autre, et à l'axe longitudinal de la pale, écartée l'un de l'autre de part et d'autre de cet axe longitudinal, l'un 10a à l'avant et l'autre 10b à l'arrière de cet axe, de sorte que l'ossature bilongeron ainsi formée soit centrée sur l'axe longitudinal ou de changement de pas de la pale, et chaque faisceau 10a ou 10b adhère directement par collage de ses faces d'intrados et d'extrados contre les faces internes des parties en regard des revêtements respectivement d'intrados 4a et d'extrados 4b de la coque 4, ce qui délimite une grande surface résistant au cisaillement induit de flexion de traînée.

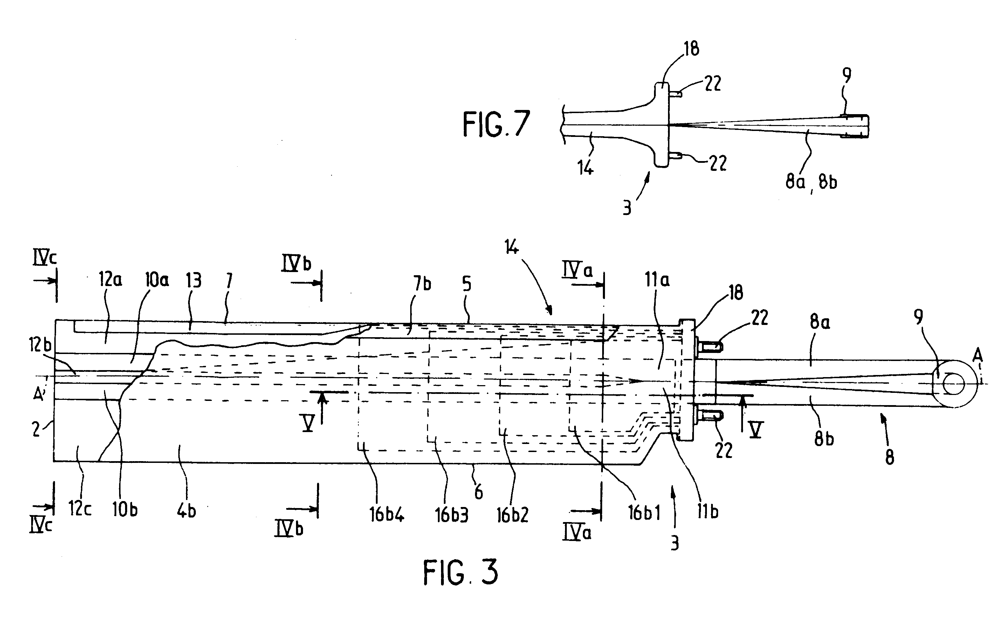

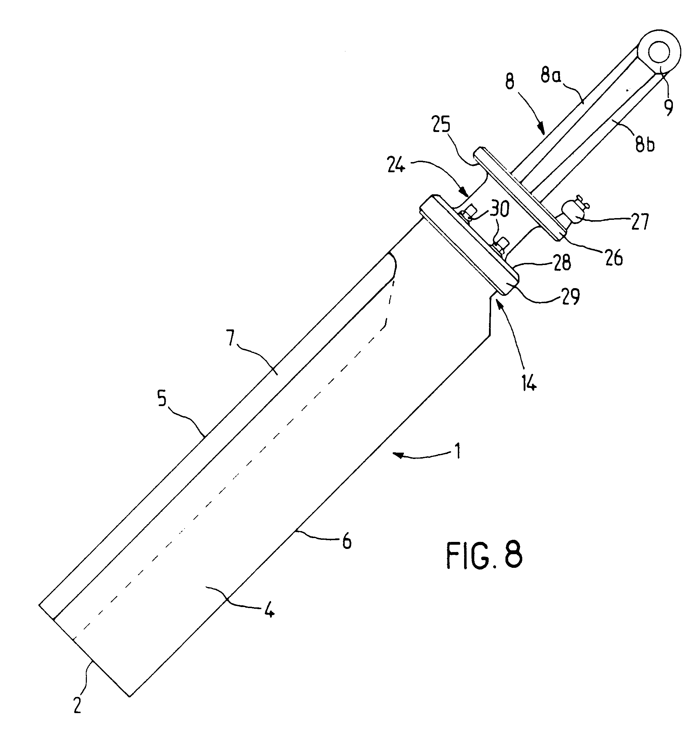

Le longeron sort de la coque 4 en traversant le pied de pale 3 par deux portions 11a et 11b des faisceaux 10a et 10b qui sont frettées et accolées l'une contre l'autre dans le pied de pale 3, dont la structure est plus précisément décrite ci-dessous en référence aux figures 5 et 6, et ces portions 11a et 11b se prolongent à l'extérieur de la coque 4, chacune par l'un des deux faisceaux respectivement 8a, 8b de la partie d'emplanture en boucle 8. La souplesse en torsion de cette partie d'emplanture 8 est obtenue par les effets combinés du faible module de cisaillement des stratifils unidirectionnels de KEVLAR des faisceaux 8a et 8b du longeron et par la forme géométrique de ces faisceaux 8a et 8b, qui comme représenté sur les figures 3 et 7, ont chacun une épaisseur (voir figure 7), mesurée parallèlement à l'axe de l'alésage central de la douille 9, qui augmente progressivement des portions 11a, 11b frettées dans le pied de pale 3 à l'extrémité interne du longeron passant autour de la douille 9, alors que la largeur de chaque faisceau 8a, 8b (voir figure 3), mesurée sensiblement perpendiculairement à l'axe de la douille 9, diminue progressivement des portions frettées 11a, 11b à la douille 9, de telle sorte que la section de chaque faisceau demeure constante.

Dans la coque 4, les faisceaux de longeron 10a et 10b délimitent avec les revêtements d'intrados 4a et d'extrados 4b trois évidements longitudinaux renfermant chacun l'un des trois corps de remplissage, en mousse de polyuréthane de faible densité, dont l'un 12a est un corps de remplissage de bord d'attaque, logé à l'avant de l'âme avant 10a, dont un second 12b est une corps de remplissage central, logé entre les âmes 10a et 10b, et dont le troisième 12c est un corps de remplissage de bord de fuite, logé à l'arrière de l'âme arrière 10b, et de section sensiblement en forme de coin.

De plus, un renfort de bord d'attaque 13, constitué de plusieurs couches longitudinales de fibres de renforcement, telles que des mèches de carbone, agglomérées par une résine synthétique d'imprégnation polymérisée, est logé à l'avant du corps de remplissage avant 12a, et entre les parties des revêtements d'intrados 4a et d'extrados 4b qui sont directement adjacentes au bord d'attaque 5. Ce renfort de bord d'attaque 13 a pour fonction d'éviter un martelage de la coiffe de protection 7 du bord d'attaque 5, lors de vols en atmosphère sablonneuse.

Dans sa partie courante 1, la pale présente ainsi une structure bi-longeron équilibrée, et à triple caisson de torsion, telle qu'en cas de choc ou de dégradation au niveau du bord d'attaque ou du bord de fuite, la structure conserve une raideur de torsion suffisante pour la commande de la pale. De plus, l'agencement du longeron replié en deux moitiés et entourant la douille d'attache 9 permet un alignement naturel et favorable des stratifils du longeron, ce qui autorise, comme décrit ci-dessous, une polymérisation sous tension, ce qui a pour effet de lui conférer une meilleure résistance à la rupture.

Comme représenté sur les figures 4a à 4c, le profil de la pale évolue ainsi progressivement, selon l'envergure,par exemple d'une section biconvexe dissymétrique (figure 4a) au niveau de la zone de transition par laquelle le pied de pale 3 est relié à la partie courante 1 de la pale, à une section présentant une surface d'extrados convexe et une surface d'intrados concave, qui est faiblement cambrée au milieu de la partie courante 1 (figures 3 et 4b) et dont la courbure augmente progressivement pour être maximale au bout de pale 2 (voir figures 3 et 4c). Cette évolution de profil permet d'optimiser le rendement aérodynamique du rotor.

Sur la figure 4a, on constate que, dans la zone de transition 14 par laquelle le pied de pale 3 est relié à la partie courante 1, des renforts d'intrados 15a et d'extrados 15b sont disposés entre les faces respectivement inférieure et supérieure des faisceaux de longeron 10a, 10b, des corps de remplissage 12a, 12b, 12c et du renfort de bord d'attaque 13, d'une part, et, d'autre part, les faces internes des parties en regard des revêtements respectivement d'intrados 4a et d'extrados 4b de la coque, et la structure de ces renforts 15a et 15b, ainsi que celle du pied de pale 3, est plus particulièrement décrite ci-dessous en référence aux figures 3, 5 et 6.

Chacun des renforts 15a et 15b est stratifié et constitué d'un empilement de plusieurs couches de tissu de fibres de verre, qui sont agglomérées par une résine synthétique d'imprégnation polymérisée et disposées de sorte que leurs fils de chaîne soient croisés à angle droit d'une couche à l'autre et inclinés sensiblement de 45°C sur la direction du bord d'attaque 5 ou de l'axe longitudinal de la pale. L'épaisseur de chaque renfort stratifié est décroissante de la partie courante 1 vers le pied de pale 3, par le fait que les différentes couches de chaque empilement ont des longueurs différentes selon l'envergure et à partir du pied de pale 3.

Comme représenté sur les figures 3 et 5, chacun des renforts tels que 15b est constitué de quatre couches telles que 16b1 à 16b4, dont la quatrième couche ou couche externe 16b4, directement sous le revêtement d'extrados 4b, s'étend selon l'envergure sur environ la moitié interne de la coque 4, jusqu'au pied 3, dont la troisième couche 16b3 s'étend directement sous la couche 16b4 mais seulement sur environ le tiers interne de la coque 4, dont la seconde couche 16b2 s'étend partiellement sous la couche 16b3 et sensiblement sur environ le quart interne de la coque 4, et enfin dont la première couche ou couche interne 16b1 s'étend directement sous la couche 16b2 et directement sur les deux faisceaux de longeron 10a,10b et les trois corps de remplissage 12a, 12b et 12c, mais seulement sur environ 1/5 de la longueur de coque 4, à partir du pied 3. Comme clairement représenté sur la figure 5, les quatre couches 17b1 à 16b4 se superposent progressivement du bord externe de la couche supérieure 16b4 vers le pied 3, et jusqu'à une zone de subdivision 17b, au niveau de laquelle le renfort d'extrados 15b se subdivise en deux parties, à savoir une partie radiale interne, par rapport à l'axe de la pale, comprenant les deux couches internes 16b1 et 16b2, et une partie radiale externe, comprenant les deux couches externes 16b3 et 16b4.

A partir de la zone de subdivision 17b et jusqu'à une bride radiale circulaire 18 formant l'extrémité axiale interne du pied de pale 3, du côté de la partie d'emplanture 8, la partie interne 16b1-16b2 du renfort d'extrados 15b reste accolée aux faces supérieures des corps de mousse 12a à 12c et des faisceaux de longeron 10a, 10b, dans les portions frettées 11a et 11b de ces dernières, aux niveaux desquelles le faisceau de stratifils du longeron ont une épaisseur minimale, qui est également celle de la portion adjacente la plus mince des faisceaux 8a et 8b, de la partie d'emplanture en boucle 8. De manière similaire, depuis la subdivision 17b jusqu'à la bride 18, la partie externe 16b3-16b4 du renfort d'extrados 15b reste accolée au revêtement d'extrados 4b, en étant séparée de la partie interne 16b1-16b2 par un élément de remplissage complémentaire d'extrados 19b, en mousse de polyuréthane, de section longitudinale en forme de coin et d'épaisseur progressivement croissante vers la bride 18, contre laquelle cet élément 19b est accolé. Les parties accolées des extrémités internes du revêtement d'extrados 4b et des couches 16b3 et 16b4 de la partie externe du renfort d'extrados 15b sont recourbées radialement, perpendiculairement à l'axe AA de la pale, de manière à former un collet radial d'extrados 20b, accolé à la bride 18 et solidarisé à cette dernière.

Comme représenté sur la figure 6, sur laquelle on retrouve les éléments de la partie d'extrados du pied de pale qui viennent d'être décrits, les éléments similaires de la partie d'intrados du pied de pale sont disposés sensiblement symétriquement par rapport au plan médian passant par l'axe longitudinal AA de la pale. Ainsi, un élément de remplissage complémentaire d'intrados 19a également en mousse de polyuréthane et accolé à la bride 18, sépare la partie interne 16a1-16a2 du renfort d'intrados 15a, qui reste accolée à la face inférieure des corps de remplissage 12a à 12c, des âmes 10a, 10b et de leurs portions ainsi frettées 11a, 11b, de la partie externe 16a3-16a4 du renfort d'intrados 15a, qui reste accolée au revêtement d'intrados 4a, et les extrémités internes de ce dernier et des couches externes 16a3 et 16a4 du renfort d'intrados 15a forment un collet radial d'intrados 20a, accolé à la bride 18 et solidarisé à celle-ci.

La zone de transition 14 présente ainsi une épaisseur décroissante de la bride 18 à la partie courante 1, et, dans sa portion voisine de la bride 18, cette zone 14 est rapidement évolutive et présente une épaisseur rapidement décroissante et une largeur rapidement croissante dans la direction de la partie courante 1. Pour cette raison, comme représenté sur la figure 3, les couches 16b1 à 16b4, qui sont sensiblement rectangulaires et de largeur et longueur progressivement croissantes, présentent un rétrécissement important dans leur partie d'extrémité du côté de la bride 18.

Cette bride 18, destinée à la solidarisation du pied de pale 3 à un organe de commande du pas de la pale, décrit ci-dessous en référence à la figure 8, est constituée par plusieurs couches 21, radiales par rapport à l'axe AA de la pale et chacune en forme de disque annulaire , de tissu de fibres de verre qui sont accolées et agglomérées les unes aux autres par une résine synthétique d'imprégnation polymérisée. Quatre boulons 22, régulièrement répartis autour de l'axe AA de la pale, en direction circonférentielle, sont ancrés sur la bride 18 par leurs têtes qui sont noyées, à la manière d'inserts, dans les couches 21 de sorte que leurs tiges filetées soient en saillie axiale par rapport à la bride 18 vers la douille 9, et puissent être utilisées pour la fixation mécanique d'un palier métallique équipé de l'organe de commande du pas sur le pied de pale 3. Enfin, dans la partie centrale de sa face tournée vers la douille 9, la bride 18 présente un évidement cylindrique centré sur l'axe AA et dans lequel est retenu par collage un joint d'étanchéité annulaire 23, qui est traversé axialement par les portions 11a et 11b frettées l'une contre l'autre des faisceaux 10a et 10b du longeron.

Le pied de pale 3, ainsi renforcé essentiellement de tissu de fibres de verre, assure une bonne reprise des efforts et moments de battement et de traînée de la pale en service, et il est favorablement agencé pour l'introduction des moments de commande du pas dans la partie d'emplanture 8 souple en torsion de la pale, à partir de l'organe de commande du pas.

Dans cet exemple, cet organe est un palier métallique d'encastrement et de guidage en rotation de la pale sur un moyeu. Comme représenté sur la figure 8, ce palier 24, qui se fixe mécaniquement et de manière amovible sur la bride 18 du pied de pale 3, est un manchon cylindrique, traversé axialement par la partie d'emplanture 8 du longeron. A son extrémité axiale du côté de la douille 9, le palier 24 présente une bride radiale externe 25, dont la périphérie forme une portée cylindrique 26 de rotation de qui porte, en saillie par rapport à l'axe AA et axialement vers la douille 9, un doigt de commande de pas 27 destiné à être articulé à rotule sur l'extrémité d'un levier de commande de pas. A son autre extrémité axiale, le palier 24 présente également une portée cylindrique de rotation 29, délimitée sur l'extérieur d'un collet battu axialement à la périphérie d'une bride radiale 28 percée de quatre trous dans lesquels sont engagées les tiges des boulons 22 de la bride 18 du pied de pale 3, lorsque le palier 24 est accolé par sa bride 28 contre la bride 18, de sorte que sa portée 29 entoure la périphérie de la bride 18. Par vissage d'écrous 30 sur les tiges des boulons 22, les deux brides 18 et 28 sont solidarisées l'une à l'autre, ce qui fixe le palier 24 au pied de pale 3.

Les deux portées 26 et 29 sont ainsi centrées sur l'axe AA longitudinal de la pale et permettent le montage en rotation du palier 24 et de la pale dans deux ouvertures coaxiales, de diamètre correspondant, qui sont ménagées dans deux parois radialement espacées l'une de l'autre sur le moyeu, comme décrit dans la demande de brevet français précitée.

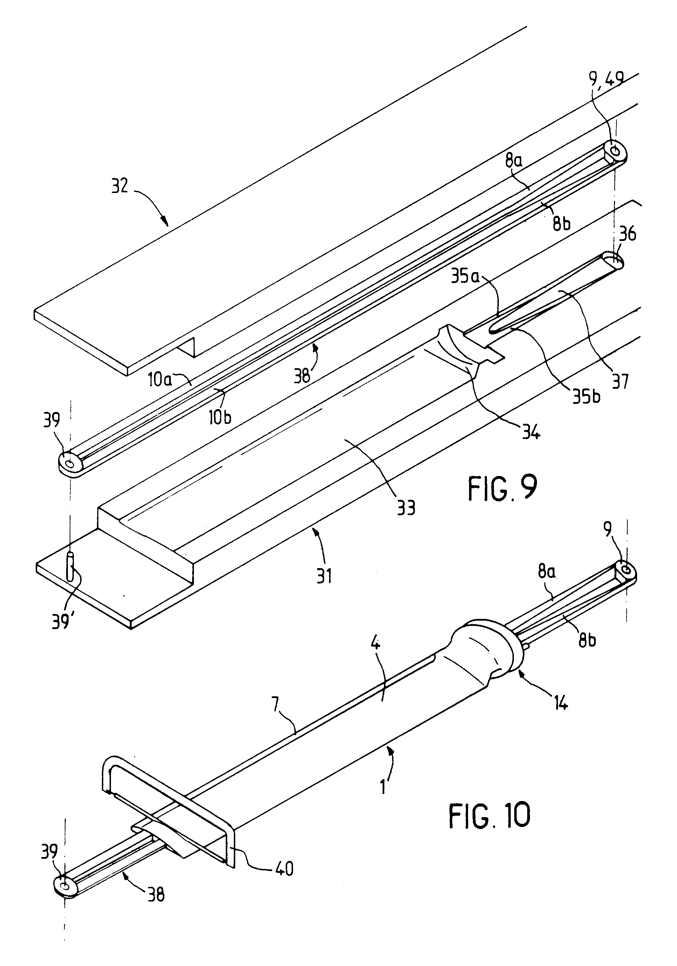

La pale, dont la structure a été décrite ci-dessus en référence aux figures 1 à 7, c'est-à-dire sans sont palier métallique 24, est fabriquée selon un procédé décrit ci-dessous, et mis en oeuvre à l'aide d'un moule schématiquement représenté sur la figure 9.

Ce moule comprend deux demi-moules complémentaires, dont l'un est un demi-moule inférieur 31 qui présente une empreinte interne dont la forme correspond transversalement et longitudinalement à la forme de la partie d'intrados et la pale, et dont l'autre est un demi-moule supérieur 32 qui présente une empreinte interne dont la forme correspond dans les mêmes conditions à celle de la partie d'extrados de la pale.

Chaque empreinte, telle que celle du demi-moule 31, comporte un évidement principal 33 dont la forme correspond à celle de la partie courante 1 de la pale, et qui se raccorde par un petit évidement plus profond 34, de forme correspondant à celle du pied de pale 14, à deux rainures 35a et 35b ayant la forme respectivement des faisceaux 8a et 8b de la partie d'emplanture en boucle du longeron. Ces rainures 35a et 35b se rejoignent à leurs extrémités adjacentes au petit évidement 34 et débouchent, par leurs extrémités opposées, dans un logement 36 de forme sensiblement cylindrique, destiné à recevoir la douille 9 et la portion de boucle 8 de stratifils qui l'entoure et entre leurs extrémités, les rainures 35a et 35b sont séparées l'une de l'autre par un noyau 37 en forme de coin, facilitant l'obtention de la conformation particulière des faisceaux 8a et 8b.

On enduit le fond des évidements 33 et 34 d'un film de colle, destiné à assurer un bon état de surface en sortie de moulage, après avoir découpé, d'une part, une couche allongée de tissu de fibres de KEVLAR® préimprégnée d'une résine thermodurcissable, qui comprend deux volets adjacents de part et d'autre d'un axe médian longitudinal correspondant au bord d'attaque de la coque 4, et destinés à former respectivement la couche externe du revêtement d'intrados 4a et du revêtement d'extrados 4b de la coque 4, et, d'autre part, deux nappes allongées de fibres de carbone également préimprégnées de la même résine et présentant chacune, dans les mêmes conditions, deux volets de nappes adjacents de part et d'autre du même axe, pour former les nappes internes superposées des revêtements respectivement d'intrados 4a et d'extrados 4b. Puis on dépose sur le film de colle dans l'évidement 33 de l'empreinte du demi-moule inférieur 31, le volet d'intrados de la couche de tissu de KEVLAR, en laissant le volet d'extrados de cette couche à l'extérieur du demi-moule inférieur 31, du côté du bord d'attaque, et on dépose ensuite successivement de la même manière sur ce volet de tissu de KEVLAR les volets d'intrados des deux nappes de carbone, de façon à empiler les trois strates du revêtement d'intrados 4a. On dispose ensuite et successivement sur cet empilement les deux couches externes 16a4 puis 16a3 de tissu de fibres de verre préimprégnées de résine qui sont destinées à former la partie externe du renfort d'intrados 15a, puis on positionne sur ces couches 16a4 et 16a3, et dans le petit évidement 34, l'élément de remplissage complémentaire d'intrados en mousse de polyuréthanne 19a. On étale ensuite et successivement les deux couches internes 16a2 puis 16a1 de tissu de fibres de verre préimprégnées de résine qui sont destinées à former la partie interne du renfort d'intrados 15a, en recouvrant l'élément de mousse 19a, et on positionne ensuite les trois corps de remplissage en mousse 12a à 12b ainsi que les mèches de carbone préimprégnées de résine du renfort longitudinal 13 de bord d'attaque. Puis on met en place le longeron. A cet effet, on utilise un écheveau de stratifils unidirectionnels de KEVLAR préimprégnés de résine et formant à l'une de ses extrémités une boucle fermée qui est aplatie, comme représentée en 38 sur la figure 9, de sorte qu'elle présente deux faisceaux sensiblement parallèles, et qu'une partie d'extrémité, de section évolutive pour former les faisceaux 8a et 8b de la partie d'emplanture 8, puisse être engagée dans le passage central de plusieurs disques annulaires 21 de tissu de fibres de verre préimprégnés de résine qui sont accolés les uns aux autres et destinés à former la bride 18 du pied de pale. Cette partie d'extrémité de la boucle fermée et aplatie de stratifils 38 s'étend au-delà des couches accolées 21 et traverse également un joint d'étanchéité 23, qui est enduit d'un film de colle et introduit dans un évidement dans la face de l'ensemble des disques accolés 21. La partie d'extrémité de la boucle 38 au-delà du joint 23 et des disques accolés 21 est ensuite passée autour d'une douille 9. Puis la boucle 38, la douille 9 et les couches accolées 21 avec le joint 23 sont disposées dans le demi-moule inférieur 31 de sorte que la douille 9 et la portion de boucle 38 qui l'entoure sont introduits dans le logement 36, que les deux portions de la partie d'extrémité correspondante de la boucle 38, qui formeront le faisceaux 8a, 8b de la partie d'emplanture 8, sont disposées dans les rainures 35a et 35b de part et d'autre du noyau central 37, que les couches accolées 21, le joint 23 et les portions de boucle 38 qui les traversent dont disposés dans le petit évidement 34 de sorte que les couches accolées 21 soient radiales et accolées à l'élément de remplissage complémentaire d'intrados en mousse 19a ainsi qu'aux parties d'extrémité des couches 16a3 et 16a4 de la moitié externe du renfort d'intrados 15a et de la couche et des nappes du revêtement d'intrados 4a, qui sont bien engagées dans le fond de l'évidement 34 de façon à former le collet radial 20a de liaison aux couches accolées 21, que les deux grandes portions sensiblement parallèles l'une à l'autre de la boucle 38, de l'autre côté de la douille 9 par rapport aux couches accolées 21, sont logées l'une entre les corps de remplissage 12a et 12b, pour former le faisceau avant 10a, et l'autre entre les corps de remplissage 12b, 12c pour former le faisceau arrière 10b du longeron, et enfin que l'extrémité de la boucle 38, qui est opposée à celle entourant la douille 9, s'étend au-delà de l'extrémité de la partie du demi-moule inférieur 31 qui présente l'évidement 33 de l'empreinte, et entoure également une douille 39 qui est engagée axialement et retenue sur un pion 39' monté sur le demi-moule inférieur 31, de sorte que son axe et celui de la douille 39 soient maintenus parallèles à celui de la douille 9. La position du pion 39' est réglable longitudinalement sur le demi-moule inférieur 31, dans la direction de l'axe de la pale formée dans le moule, de sorte que l'écheveau 38 est mis en tension longitudinale. Puis les deux couches de fibres de verre 16b1 et 16b2 de la moitié interne du renfort d'extrados 15b sont successivement mises en place au-dessus des corps de remplissage 12a à 12c et du longeron, l'élément de remplissage complémentaire d'extrados 19b, en mousse de polyuréthane , est positionné sur les couches 16b1 et 16b2, et contre les couches accolées 21, et ensuite les deux couches de fibres de verre 16b3 et 16b4 de la moitié externe du renfort d'extrados 15b sont étalées en position par-dessus les couches 16a1 et 16a2 et l'élément 19b. Enfin, les volets d'extrados des deux nappes de carbone et le volet d'extrados de la couche de tissu de fibres de verre, qui ont été maintenus à l'extérieur de l'empreinte du demi-moule inférieur 31 ,sont à présent successivement rabattus par-dessus l'empilage disposé dans le demi-moule inférieur 31, de façon à former le revêtement d'extrados 4b.

Puis, après mise en place de la coiffe de protection 7 du bord d'attaque, le moule peut être fermé une première fois par mise en place du demi-moule supérieur 32 sur le demi-moule inférieur 31, afin de compacter l'empilage, puis le moule peut être réouvert afin d'enduire les deux évidements de l'empreinte du demi-moule supérieur 32 d'un film de colle pour assurer un bon état de surface à la pale moulée. Le moule est ensuite fermé à nouveau et soumis à un traitement thermique de polymérisation de la résine thermodurcissable d'imprégnation, en maintenant constamment sous tension longitudinale l'écheveau 38 des stratifils de KEVLAR du longeron.

Après polymérisation de la résine, on supprime la tension longitudinale exercée sur la boucle 38 et on ouvre le moule pour procéder au démoulage, et il suffit ensuite de couper l'extrémité de la boucle 38 entourant la douille de tension 39 et qui fait saillie hors de la coque 4, à l'aide d'un organe de coupe ou de sciage 40, tel que représenté schématiquement sur la figure 10, pour obtenir la pale selon les figures 1 à 7. Bien entendu, les inserts 22 peuvent être ancrés dans la bride 18 ainsi formée, au cours de l'unique opération de moulage. La polymérisation du longeron sous tension améliore sa résistance en traction pouvant atteindre le double de celle obtenue par une polymérisation sans mise sous tension, et permet l'obtention d'une excellente répétitivité du mode opératoire, du fait de la tension uniforme appliquée aux stratifils pendant le durcissement de la résine qui les agglomère.

On réalise ainsi un longeron combinant une grande résistance mécanique dans la direction longitudinale, lui permettant d'encaisser les forces centrifuges appliquées à la pale sous un très faible allongement, avec une relative souplesse, en particulier dans la partie d'emplanture en boucle 8 et en torsion autour de son axe longitudinal, ce qui permet de commander les changements de pas de la pale en exerçant sur la coque 4 et le longeron de la pale des couples de torsion centrés sur leur axe longitudinal commun, et de valeur relativement faible.

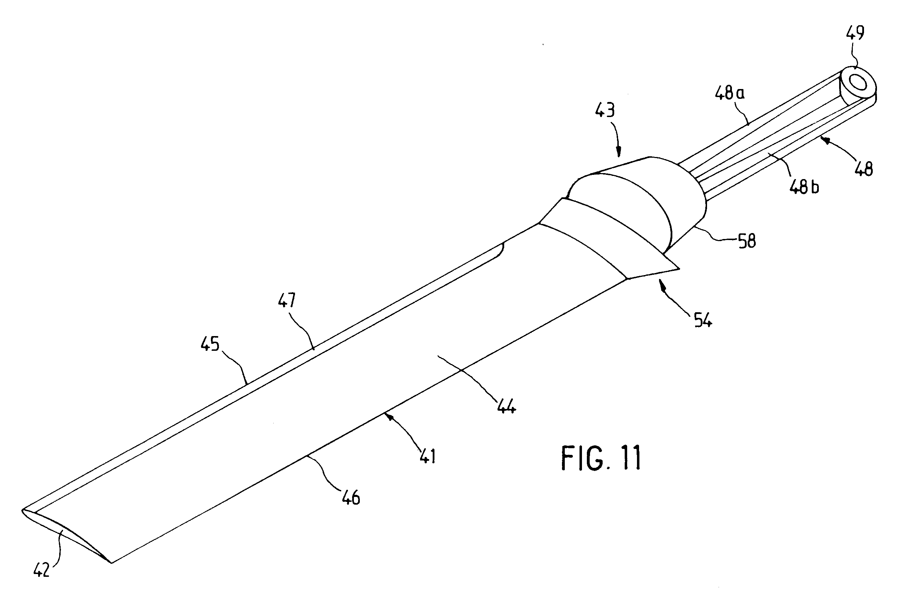

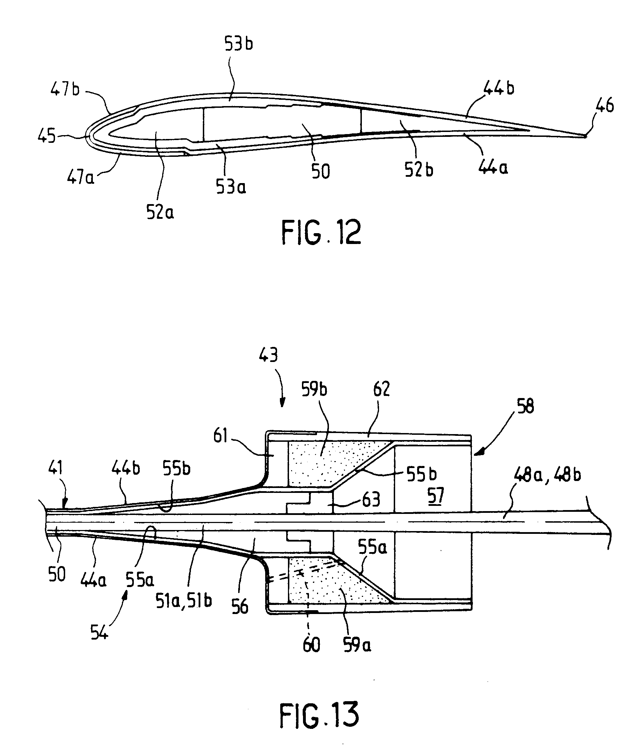

La pale pour rotor arrière caréné d'hélicoptère, essentiellement en matériaux composites, et telle que représentée sur la figure 11 à la sortie d'un moulage en une seule opération, comprend dans sa partie courante 41, entre le bout de pale 42, à son extrémité libre ou extrémité externe, et le pied de pale 43, du côté interne, destiné à être tourné vers le moyeu sur lequel la pale se fixera, une coque rigide 44 ayant la forme du profil aérodynamique souhaité, qui est un profil constant suivant l'envergure. Cette coque 44, qui enveloppe deux corps de remplissage et un longeron plus particulièrement décrits ci-dessous en référence à la figure 12, est une coque constituée de revêtements d'intrados et d'extrados s'étendant de façon continue du bord d'attaque 45 au bord de fuite 46, le long desquels ces revêtements se raccordent l'un à l'autre, et comprenant chacun une peau stratifiée, respectivement d'intrados 44a et d'extrados 44b, doublée intérieurement, à partir du bord d'attaque 45 et sur environ les trois-quarts de sa largeur selon la corde de la pale, vers le bord de fuite 46, par une semelle de renfort respectivement d'intrados 53a et d'extrados 53b.

Chacune des peaux 44a et 44b est constituée par un empilement comprenant, de l'intérieur vers l'extérieur, deux couches superposées et croisées de tissu de fibres aramides (par exemple de KEVLAR®) dont les fils de chaîne et de trame sont inclinés sensiblement de 45° sur l'axe longitudinal de la pale ou sur la direction du bord d'attaque 45, et qui sont agglomérées par une résine synthétique d'imprégnation polymérisée par thermodurcissage, de façon à former un caisson assurant la rigidité en torsion de l'ensemble de la pale, ce caisson étant recouvert extérieurement d'un film de colle, qui assure un bon état de surface externe de la coque 44, en sortie de moulage.

La pale de la figure 11 comprend également une coiffe 47 de protection du bord d'attaque 45, cette coiffe 47 ayant (voir figure 12) une section transversale en forme de U avec une aile d'intrados 47a qui s'étend plus loin vers le bord de fuite 46 que l'aile d'extrados 47b, et la coiffe 47 s'étendant d'une zone de transition par laquelle la partie courante 41 se rattache au pied de pale 43, jusqu'au bout de pale 42. Cette coiffe 47 est intégrée à la coque 44 et réalisée en titane ou en polyuréthane moulé, pour protéger la pale des éléments érosifs (tels que l'eau ou le sable) avec un profil correspondant à celui de la pale et une épaisseur plus importante au niveau du bord d'attaque 45 que sur les ailes 47a et 47b.

La pale de la figure 11 comprend également une partie d'emplanture 48, rigide en direction longitudinale et souple en torsion autour de l'axe longitudinal, et qui est conformée en boucle entourant une douille 49 d'attache au moyeu (non représenté). La douille 49 est une pièce tubulaire monobloc en alliage léger permettant la fixation de la pale sur un moyeu tel que celui décrit dans la demande de brevet français précitée n° 83 04 448, à laquelle on se reportera pour de plus amples précisions sur sa structure, la fixation étant assurée par un boulon dont la tige passe dans l'alésage central de la douille 49, qui est positionnée de sorte que son axe soit parallèle à l'axe de rotation du moyeu.

La partie d'amplanture 48 qui s'enroule autour de la douille 49 est formée par la partie d'extrémité interne d'un longeron constitué à partir d'un enroulement en écheveau de stratifils unidirectionnels de fibres aramides agglomérées par une résine synthétique d'imprégnation polymérisée. Les deux faisceaux constitutifs de l'écheveau sont sur environ les deux tiers de leur longueur vers leur extrémité extérieure accolés longitudinalement l'un à l'autre de manière à ne former qu'un seul faisceau massif et plein 50 (voir figure 12) en forme de lame, sensiblement plane, de section rectangulaire dont la plus grande dimension de la section est dirigée selon la corde de la pale et qui est reçu dans la coque 44, tandis que l'autre extrémité de l'écheveau s'étendant sur environ le tiers interne constitue la partie d'emplanture 48 en forme de boucle qui est formée par les deux faisceaux 48a et 48b qui s'enroulent autour de la douille 49 et se prolongent dans la coque 44 en s'accolant en un faisceau unique formant le longeron 50.

Comme représenté sur les figure 12 et 13, le faisceau de stratifils 50 du longeron est réalisé de sorte qu'il forme une ossature résistante monolongeron centrée sur l'axe longitudinal de la pale. Il adhère directement par collage de ses faces d'intrados et d'extrados contre les faces internes des parties en regard des semelles respectivement d'intrados 53a et d'extrados 53b de renfort de la peau 44a, 44b de la coque 44, ce qui délimite une grande surface résistant au cisaillement induit de flexion.

Le longeron sort de la coque 44 en traversant le pied de pale 43 par deux portions 51a et 51b, reliant respectivement chacune des deux parties accolées formant le faisceau unique 50 à l'un des faisceaux 48a ou 48b correspondant de la partie d'emplanture 48 et à l'extérieur de la coque 44. Ces deux portions 51a et 51b sont frettées l'une contre l'autre dans le pied de pale 43, dont la structure est plus précisément décrite ci-dessous en référence à la figure 13.

La souplesse en torsion de la partie d'emplanture 48 est obtenue par les effets combinés du faible module de cisaillement des stratifils unidirectionnels des faisceaux 48a et 48b du longeron et par la forme géométrique de ces brins, qui, comme représenté sur les figures 11 et 13, ont chacun une épaisseur, parallèlement à l'axe de la douille 49, qui augmente progressivement des portions frettées 51a et 51b, au niveau desquelles l'épaisseur du faisceau est minimum, jusqu'à la portion du faisceau passant autour de la douille 49, tandis que la largeur de chaque faisceau 48a et 48b, mesurée perpendiculairement aux axes de la douille 49 et longitudinal de la pale, diminue progressivement des portions frettées 51a et 51b à la douille 49.

La fonction de la partie d'emplanture 48 est double : d'une part elle reprend l'effort centrifuge, d'autre part, elle permet les débattements angulaires de la pale nécessaires à la commande de pas, sans articulation mécanique.

Chacune des semelles de renfort 53a et 53b des revêtements d'intrados et d'extrados de la pale 44 est constituée par un empilement de cinq nappes longitudinales, de largeur différente selon la corde, de fibres de carbone agglomérées par une résine synthétique d'imprégnation polymérisée. La largeur de ces cinq nappes de carbone empilées augmente d'une nappe à l'autre et de la nappe interne à la nappe externe de l'empilement, à partir du bord d'attaque 45 et vers le bord de fuite 46, comme représenté sur la figure 12. Placées de part et d'autre du faisceau 50 du longeron, auquel les semelles 53a et 53b adhèrent directement, ces semelles rigidifient la section de la pale à l'encontre des efforts de battement dans la coque 44 . Le faisceau central 50 du longeron délimite avec les semelles 53a, 53b et les peaux 44a, 44b des revêtements respectivement d'intrados et d'extrados, deux évidements longitudinaux renfermant chacun un remplissage de même nature que les semelles 53a et 53b. Les nappes longitudinales de fibres de carbone agglomérées par une résine synthétique d'imprégnation polymérisée, qui constituent d'une part le remplissage de bord d'attaque 52a, à l'avant du faisceau 50, et, d'autre part, le remplissage de bord de fuite 52b, à l'arrière du faisceau 50, ont pour effet de rigidifier la pale dans le plan de traînée.

Les nappes de carbone des semelles 53a, 53b et des remplissages 52a et 52b sont agglomérées les unes aux autres ainsi qu'aux couches de tissu de la peau des revêtements 44a et 44b et aux stratifils du faisceau 50 par la ou les résines d'imprégnation polymérisées.

Dans sa partie courante 41, la pale présente ainsi une structure équilibrée mono-longeron, à double caisson de torsion. En cas de choc ou de dégradation aux niveaux du bord d'attaque ou du bord de fuite, cette structure conserve une raideur de torsion suffisante pour la commande de la pale. De plus, l'agencement du longeron en écheveau entourant la douille 49 permet un alignement naturel des stratifils de KEVLAR® à partir de la douille 49, ce qui autorise comme décrit ci-dessous une polymérisation des stratifils de KEVLAR sous tension longitudinale, ayant pour effet de leur conférer une meilleure résistance à la rupture en traction.

Sur la figure 13, représentant le pied de pale 43 en coupe longitudinale, ce dernier est conformé, dans sa partie tournée vers la douille 49, en embout tubulaire 58, de forme légèrement tronconique à petite base située du côté de la douille 49, et cet embout tubulaire 58 est relié à la partie courante 41 de la pale par une partie de transition 54, qui présente une épaisseur progressivement décroissante de l'embout 58 à la partie courante 41. Cette partie de transition 54, qui est une zone doublement évolutive, puisqu'elle est également de largeur (selon la corde) légèrement et progressivement croissante de la partie courante 41 vers l'embout 58, comme représenté sur la figure 11, comprend, de l'extérieur vers l'intérieur, les parties d'extrémité des peaux 44a et 44b et des nappes de carbone des semelles 53a, 53b et des corps de remplissage 52a, 52b, ces nappes longitudinales de fibres de carbone unidirectionnelles formant, au niveau de cette partie de transition 54, des renforts respectivement d'intrados 55a et d'extrados 55b, s'étendant sous les peaux 44a et 44b, et recouvrant une frette 56, qui enserre l'une contre l'autre les portions 51a, 51b des moitiés du faisceau du longeron qui traversent le pied de pale 43. Cette frette 56 est constituée par un empilement de couches de fibres de verre agglomérées par une résine synthétique polymérisée, et l'empilement présente une épaisseur progressivement croissante de la partie courante 41 à l'embout 58, puis une épaisseur constante dans une partie d'extrémité de cette frette 56 qui est tournée vers la douille 49 et qui pénètre dans l'embout 58, dans lequel elle enserre une portion épaulée d'un joint d'étanchéité 63, traversé par les faisceaux 48a et 48b de la partie d'emplanture en boucle 48 du longeron.

L'embout 58 est formé d'une manchette tronconique et périphérique 62, constituée par un empilage de couches de tissu de fibres de verre agglomérées par une résine synthétique d'imprégnation polymérisée, et qui est partiellement fermée au niveau de sa grande base, du côté de la partie de transition 54, par une butée annulaire 61, également constituée de couches de tissu de fibres de verre, qui sont découpées en disques annulaires accolés radialement par rapport à l'axe de la manchette 62 et du longeron, et agglomérés par une résine synthétique d'imprégnation polymérisée, de sorte que l'évidement interne 57 du manchon 58 s'ouvre vers la douille 49 sur pratiquement toute la section de la petite base de la manchette 62.

La partie d'épaisseur constante de la frette 56 qui est reçue dans l'embout 58 pénètre dans l'évidement interne 57 de la manchette 62 en traversant le passage central de la butée annulaire 61, tout en restant entourée par les parties d'extrémité des nappes de carbone des renforts d'intrados 55a et d'extrados 55b, qui se séparent des peaux 44a et 44b des revêtements d'intrados et d'extrados au niveau du bord radial interne de la face tournée vers la partie de transition 54 de la butée radiale annulaire 61. Ainsi, la partie de transition 54 se raccorde à l'embout 58 au niveau du bord radial interne de la face de la butée annulaire 61 qui est tournée vers ladite partie 54, et cette face de la butée 61 est recouverte par la partie d'extrémité des peaux de revêtement d'intrados 44a et d'extrados 44b, qui entourent également une bande de surface périphérique externe de la manchette 62, au niveau de sa grande base.

La partie du joint d'étanchéité 63 qui n'est pas reçue dans l'extrémité de la frette 56 à l'intérieur de l'embout 58 est également entourée par les renforts d'intrados 55a et d'extrados 55b en nappes de carbone correspondant aux extrémités des semelles 53a, 53b et des corps de remplissage 52a, 52b, et ces renforts 55a, et 55b forment une doublure interne d'un remplissage complémentaire en mousse de polyuréthane , constitué de deux corps respectivement d'intrados 59a et d'extrados 59b, chacun ayant la forme d'un corps semi-circulaire de section axiale sensiblement en forme de trapèze rectangle. Ces deux corps 59a, 59b se complètent et sont aboutés pour former, dans sensiblement la moitié de l'embout 58 du côté de la partie de transition 54, un anneau de centrage entourant la frette 56 et le joint 63, et maintenu appliqué par la grande base, la hauteur et l'angle droit formé par ces dernières dans chacune de ses sections, respectivement contre la face interne de la manchette 62, la face latérale interne de la butée radiale 61 et dans l'angle délimité par ces faces, à l'aide des renforts de nappes de carbone 55a et 55b, qui recouvrent la face interne inclinée des corps 59a et 59b, et forment une doublure interne de la face interne de la manchette 62, à laquelle ces renforts adhèrent dans sensiblement la moitié de cette manchette du côté de la douille 49.

Le joint d'étanchéité 63 a pour fonction d'empêcher la pénétration dans le pied de pale 43 des éléments, tels que poussières ou gouttes d'eau qui, sous l'effet de la force centrifuge, tendent à se déplacer le long des brins 48a, 48b du longeron, et, pour empêcher que l'eau en particulier ne s'accumule dans l'évidement 57, et contre le joint 63, un passage d'évacuation 60 est percé au travers du corps de remplissage complémentaire inférieur 59a et de la butée radiale 61, et ce passage est incliné vers le bas et vers l'extérieur, dans le sens centrifuge, depuis la face inclinée de ce corps 59a qui est tournée vers l'évidement 57 jusqu'à la face latérale externe de la butée 61, ce passage d'évacuation débouchant également au travers de la peau du revêtement d'intrados 44a qui recouvre cette face externe de la butée 61.

A l'exception du remplissage complémentaire en mousse de polyuréthane 59a, 59b, le pied de pale 43 est donc constitué en majeure partie de tissu de fibres de verre et de nappes de carbone agglomérées par la résine synthétique polymérisée. Les tissus de verre sont utilisés pour réaliser la butée 61, la manchette 62 et la frette 56. Cette frette 56, en entourant les portions 51a, 51b du longeron, a pour fonction d'empêcher l'ouverture du faisceau de stratifils du longeron, sous l'action de la force centrifuge. Le choix des fibres de verre pour réaliser cet élément permet une certaine compatibilité d'allongement, sous l'effet de la force centrifuge, entre les stratifils de KEVLAR® du longeron, à l'intérieur de la frette 56, et les nappes de carbone des renforts 55a et 55b, à l'extérieur de la frette 56.

Ces nappes de carbone, disposées longitudinalement par rapport au bord d'attaque 45 de la pale, s'épanouissent dans la partie courante 41, où elles forment les semelles 53a, 53b, ainsi que les corps de remplissage de bord d'attaque ou avant 52a et de bord de fuite ou arrière 52b. Ces nappes de carbone confèrent à l'ensemble de la structure une grande rigidité.

Ainsi réalisé, le pied de pale 43 assure une bonne reprise des efforts et moments de battement et de traînée qui s'exercent sur la pale, et permet l'introduction des efforts de commande de pas dans la partie d'emplanture 48, souple en torsion, par l'intermédiaire d'un organe de commande du pas.

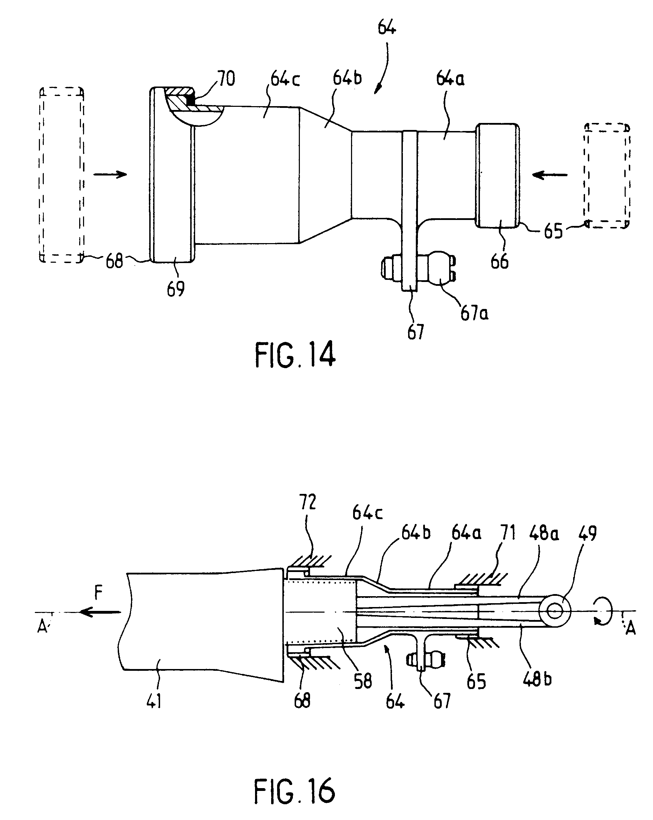

Cet organe de commande, représenté sur la figure 14, est un palier métallique 64 qui assure l'encastrement et le guidage en rotation de la pale sur le moyeu de la manière schématisée sur la figure 16 et décrite ci-dessous.

Le palier 64 de la figure 14 est agencé en fût tubulaire, destiné à traversé par la partie d'emplanture 48 de la pale, et qui comprend, du côté tourné vers la douille 49 en position d'utilisation, un tronçon cylindrique de section circulaire 64a, qui se prolonge, du côté opposé à douille 49, par un évasement central tronconique 64b divergent et lui-même prolongé, dans la même direction, par un tronçon tronconique 64c, également divergent du côté opposé à la douille 49, mais avec un angle de conicité bien plus faible que celui de l'évasement 64b. De la sorte, le tronçon cylindrique 64a, qui porte un levier de commande de pas 67 s'étendant en saillie radiale par rapport à l'axe du palier 64 et qui est équipé à son extrémité libre d'un doigt à rotule 67a d'articulation sur une biellette de commande de pas, par exemple d'un dispositif de commande collective du pas des pales d'une hélice multipale, du type décrit dans la demande de brevet français précitée, est de diamètres interne et externe inférieurs aux diamètres respectivement interne et externe du tronçon faiblement tronconique 64c, même au niveau de la petite base de ce dernier, à son extrémité du côté de l'évasement central 64b. L'extrémité axiale libre du tronçon 64a est entourée d'une bague 65, dont la surface latérale externe présente une portée périphérique et cylindrique 66. De même, l'extrémité axiale libre du tronçon 64c est entourée d'une bague 68, dont la surface latérale externe présente une portée périphérique et cylindrique 69. Les bagues 65 et 68 sont des pièces d'usure qui doivent pouvoir éventuellement être remplacées. Pour cette raison, elles sont fixées sur les extrémités axiales du fût 64 par un simple frettage assuré par emmanchement thermique. Leurs portées cylindriques 66 et 69 sont constituées par un revêtement en céramique de grande dureté, qui allonge la durée de vie des bagues.

Enfin, le palier 64 comporte une masse d'équilibrage statique 70, qui est constituée d'un petit fil de plomb noyé dans une résine de polyester remplissant une cavité aménagée entre le tronçon tronconique 64c et l'extrémité, située du côté de l'évasement central 64b, de la bague de grand diamètre 68.

La fixation du palier métallique 64 sur le pied de pale 43 est assurée par emmanchement conique de type "cône morse" du tronçon tronconique 64c du palier 64 sur l'embout tronconique 58 du pied de pale 43, avec interposition d'un film de colle entre les deux surfaces tronconiques ainsi en regard.

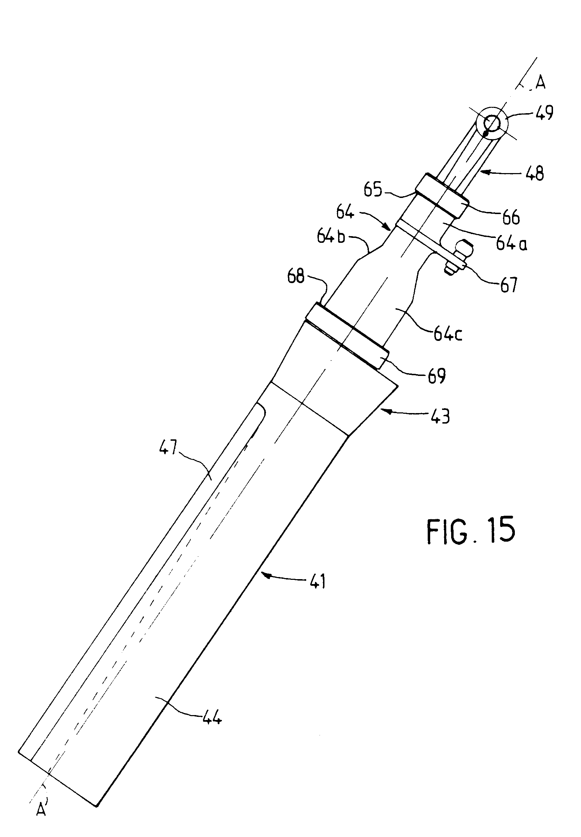

La pale telle que sortie de moulage selon la figure 11 et ainsi équipée de son palier de commande de pas 64, est représentée en plan sur la figure 15, prête à être montée sur un moyeu d'hélice tel que décrit dans la demande de brevet précitée.

Le type d'emmanchement utilisé pour fixer le palier 64 sur le pied de pale 43 présente les avantages d'assurer une bonne pression de collage sur les surfaces en contact, ce qui ne peut pas être obtenu par un emmanchement cylindrique, et de procurer un caractère à l'épreuve d'avarie (caractère "fail-safe") à la liaison collée. En effet, l'orientation des éléments tronconiques, dont la petite base est du côté tourné vers la douille 49 de liaison au moyen, est telle qu'en cas de défaillance du collage, le palier métallique 64 soumis aux forces centrifuges est maintenu en butée contre l'embout 58 du pied de pale 43, comme cela est schématisé sur la figure 16. Sur celle-ci, la flèche F indique le sens des forces centrifuges qui sollicitent le palier 64 contre l'embout tronconique 58 du pied 43 de la pale retenue par sa partie d'emplanture 48 et la douille d'attache 49 correspondante sur le moyeu, lorsque la pale est entraînée en rotation par ce moyeu. Il apparaît qu'un angle très faible de conicité, de l'ordre de quelques degrés, suffit à procurer une adhérence suffisante pour la transmission du couple de commande de pas, introduit par le levier 67 sur le palier 64, et par ce dernier sur l'embout 58 du pied de pale 43, qui le transfère à la coque rigide 44 et ainsi à la partie d'emplanture 48 sous forme d'un couple de torsion centré sur l'axe longitudinal AA de la pale.

La figure 16 représente également schématiquement le montage en rotation et l'encastrement du palier 64 sur un moyeu comprenant deux parties 71 et 72 radialement écartées l'une de l'autre par rapport à l'axe de rotation (non représenté) du moyeu. Une ouverture circulaire de diamètre correspondant au diamètre externe de la petite bague 65 est ménagée dans la partie radiale interne 71 du moyeu, et une ouverture circulaire coaxiale à celle de la partie 71 est également ménagée dans la partie radiale externe 72 du moyeu, mais avec un diamètre correspondant à celui du diamètre externe de la grande bague 68, de sorte que les portées 66 et 69 des bagues 65 et 68 constituent les surfaces de contact avec le moyeu, par lesquelles le palier 64 est monté tourillonnant dans les ouvertures des parties 71 et 72 du moyeu, autour de leur axe commun, qui est également l'axe longitudinal AA de la pale. L'écartement maximum entre les bagues 65 et 68, disposées aux extrémités axiales du palier 64, est favorable à un bon encastrement et à un bon guidage en rotation sur le moyeu.

La pale, dont la structure vient d'être décrite ci-dessus en référence aux figures 11 à 13, c'est-à-dire sans son palier métallique 64, est fabriquée selon un procédé décrit ci-dessous, et mis en oeuvre à l'aide d'un moule tel que celui schématiquement représenté sur la figure 9 et comprenant deux demi-moules complémentaires, dont le demi-moule inférieur 31 présente une empreinte interne de forme correspondant ,selon la corde et selon l'envergure, à la forme de la partie d'intrados de la pale, et dont le demi-moule supérieur 32 présente également une empreinte interne de forme correspondant, dans les mêmes conditions, à celle de la partie d'extrados de la pale.

Pour ces raisons, l'évidement principal 33 et le petit évidement plus profond 34 de chaque empreinte, telle que celle du demi-moule inférieur 31, présentent des formes correspondant respectivement à celles de la partie courante 41 et du pied 54 de la pale, tandis que les deux rainures 35a et 35b ont la forme respectivement des brins 48a et 48b de la partie d'emplanture en boucle 48 de la pale, entre le petit évidement 34 du pied de pale et le logement 36 de réception, dans le demi-moule inférieur 31, de la douille d'attache 49 et de la portion de la boucle 48 du longeron qui l'entoure , et de part et d'autre du noyau central 37, en forme de coin, facilitant l'obtention de la conformation particulière des faisceaux 48a et 48b.

On étale dans le fond des évidements 33 et 34 de l'empreinte du demi-moule inférieur 31 un film de colle solide. Puis après avoir découpé les deux couches allongées de tissu de KEVLAR® préimprégné d'une résine thermodurcissable, de sorte que chaque couche comprenne deux volets adjacents de part et d'autre d'un axe médian longitudinal, correspondant au bord d'attaque de la coque 44, ces volets étant destinés à appartenir l'un à la peau d'intrados 44a et l'autre à la peau d'extrados 44b, on étale en les superposant les deux volets de la peau d'intrados 44a dans les évidements 33 et 34 du demi-moule inférieur 31, en laissant le volet d'extrados de chaque couche à l'extérieur du demi-moule inférieur 31, du côté du bord d'attaque. Dans le petit évidement 34, on positionne ensuite les couches de tissu de verre préimprégnées de la moitié d'intrados de la manchette 62 et les couches annulaires accolées et préimprégnées de la butée 61, puis on place l'élément de remplissage complémentaire d'intrados 59a en mousse. Ensuite, on dépose successivement et en les superposant, dans les mêmes conditions que pour les volets des couches de KEVLAR, les volets d'intrados de cinq nappes longitudinales de fibres unidirectionnelles de carbone préimprégnées, de largeur différente d'un volet à l'autre, et destinées à former la semelle d'intrados 53a, en laissant les volets d'extrados de ces nappes à l'extérieur du demi-moule inférieur 31, toujours du côté du bord d'attaque. On étale ensuite les nappes longitudinales de fibres undirectionnelles de carbone préimprégnées destinées à former les corps de remplissage 52a et 52b. Au niveau de l'évidement 34 du pied de pale, les extrémités de ces nappes de carbone sont introduites dans le passage central des disques de la butée 61, puis étalées sur l'élément de mousse 59a et contre les couches de tissu de verre de la manchette 62. On positionne ensuite les volets superposés des couches de tissu de verre préimprégnées de la partie d'intrados de la frette 56, puis l'écheveau de stratifils unidirectionnels de KEVLAR® préimprégnés du longeron, cet écheveau formant une boucle fermée et aplatie, comme représenté en 38 sur la figure 9, de façon à présenter deux moitiés sensiblement rabattues l'une contre l'autre, et qu'une partie d'extrémité de section évolutive pour former les faisceaux 48a, 48b de la partie d'emplanture 48, puisse être engagée dans le passage central des disques annulaires en tissu de verre de la butée 61, cette partie d'extrémité de la boucle fermée de stratifils 38 s'étendant au-delà de ces couches de la butée 61 et traversant également un joint d'étanchéité 63, partiellement enduit de colle et appliqué sur les couches de tissu de verre de la partie d'intrados de la frette 56. La partie d'extrémité de a boucle 38 au-delà du joint 63 et des disques accolés de la butée 61 est ensuite passée autour de la douille 49, puis cette partie de boucle 38 et la douille 49 sont disposées dans le logement 36 et dans les rainures 35a et 35b de part et d'autre du noyau central 37, et les deux grandes portions sensiblement parallèles l'une à l'autre de la boucle 38, de l'autre côté de la bobine 49 par rapport aux disques accolés de la butée 61, sont logées l'une contre l'autre entre les nappes de carbone des corps de remplissage 52a et 52b, pour former le faisceau central et massif du longeron. L'extrémité de l'écheveau 38 qui est du côté opposé à la douille 49 s'étend au-delà de l'extrémité de la partie du demi-moule inférieur 31 qui présente l'évidement 33 de l'empreinte, et elle entoure également une bobine 39 qui est engagée et retenue axialement sur un pion 39' monté sur le demi-moule inférieur 31 de sorte que son axe et celui de la bobine 39 soient maintenus parallèles à celui de la douille 49, et la position du pion 39' est avantageusement réglable longitudinalement sur le demi-moule inférieur 31, de sorte que l'écheveau 38 soit mis en tension longitudinale. Puis on rabat sur les parties frettées 51a, 51b du longeron les volets d'extrados des couches de tissue de verre de la frette 56, qui est aménagée comme représenté sur la figure 13, à l'intérieur du passage central de la butée 61 et au-dessus du joint 63. Puis les volets des nappes de carbone formant la semelle d'extrados 53b sont rabattus sur le longeron, et le renfort d'extrados 55b est rabattu sur la frette 56 et engagé dans les disques de la butée annulaire 61, l'élément de remplissage complémentaire d'extrados 59b est positionné et la manchette 62 est complétée par mise en place de couches de tissu de verre, avec l'aide éventuellement d'un mandrin de moulage positionné dans le petit évidement 34 du pied de pale. On rabat ensuite les volets d'extrados des deux couches de tissu de KEVLAR® de la peau d'extrados 44b, et on ferme le moule par mise en place du demi-moule supérieur sur le demi-moule inférieur 31, afin de compacter l'ensemble empilé qu'ils contiennent. Après réouverture du moule, on positionne la coiffe de bord d'attaque 47, puis on referme le moule après avoir préalablement enduit d'un film de colle l'empreinte du demi-moule supérieur 32, et on effectue ensuite un traitement thermique de polymérisation de la résine d'imprégnation, en maintenant la boucle fermée des stratifils sous tension. Après la polymérisation, on ouvre le moule pour démouler la pale et enfin on découpe la partie d'extrémité de la boucle de stratifils qui entour la bobine de traction, pour obtenir la pale telle que représentée sur la figure 11.

Ce procédé reprend donc les étapes principales utilisées dans le procédé de fabrication du premier exemple de pale. En particulier, on retrouve la phase de polymérisation sous tension des stratifils du longeron, ce qui est avantageusement permis par leur disposition particulière assurant leur alignement dans le prolongement de la douille.

La pale selon le second exemple possède une structure massive qui, contrairement à la pale du premier exemple, ne comporte pas d'éléments en mousse de faible densité, à l'exception des deux petits éléments de remplissage complémentaires du pied de pale. Or, de tels remplissages en mousse offrent l'avantage d'absorber les variations de volume liées à la tolérance sur le taux d'imprégnation en régime polymérisable des éléments préimprégnés qui sont assemblés dans le moule. C'est la raison pour laquelle il est nécessaire, lors de la fabrication de la pale selon le second exemple, d'apporter une correction massique des éléments, au moment du moulage, par un film de colle de densité égale à celle de la résine, ce qui permet de respecter la conservation des volumes.

## Revendications

1. Pale essentiellement en matériaux composites, notamment pour une hélice multipale à pas variable et à pales démontables individuellement, utilisable en particulier comme rotor arrière, de préférence caréné, d'un giravion tel qu'un hélicoptère, comprenant :
- une coque (4, 44) à profil aérodynamique, ayant des revêtements d'extrados (4b, 44b) et d'intrados (4a, 44a) qui s'étendent du bord d'attaque (5, 45) au bord de fuite (6, 46) de la pale, le long duquel bord de fuite ils se raccordent l'un à l'autre, la coque (4, 44) comportant au moins une couche de tissu de fibres à haute résistance mécanique agglomérées par une résine synthétique d'imprégnation polymérisée, et ayant une extrémité intérieure conformée en pied de pale (3, 43),
- un longeron (8, 10a, 10b; 48, 50) d'axe longitudinal sensiblement parallèle à celui de la pale, et comportant au moins un faisceau allongé (10a, 10b; 50) de stratifils de fibres à haute résistance mécanique agglomérés par une résine synthétique polymérisée, dont la plus grande partie est logée dans la coque (4, 44) et fixée par adhérence de sa face d'extrados directement contre la face interne de la partie en regard du revêtement d'extrados (4b, 44b) de la coque, et dont une partie d'extrémité interne, sortant de la coque (4, 44) en traversant le pied de pale (3, 43), forme une partie d'emplanture (8, 48) souple en torsion et flexion, aménagée en boucle qui entoure, par son extrémité interne, une unique douille d'attache (9, 49), par laquelle la pale est destinée à être individuellement rattachée à un moyeu,
- un remplissage (12a, 12b, 12c; 52a, 52b) disposé dans la coque (4, 44), entre cette dernière et le longeron (8, 10a, 10b; 48, 50), et
- un organe (24, 64) de commande du pas de la pale, qui est solidaire du pied de pale (3, 43) et destiné à être monté en rotation sur le moyeu autour de l'axe longitudinal de la pale, et à exercer sur la coque (4, 44) un couple de torsion sensiblement centré sur l'axe longitudinal du longeron,
- une zone de transition (14, 54) qui relie progressivement la partie courante (1, 41) aérodynamiquement profilée de la pale à une embase circulaire (18, 58) de liaison à l'organe de commande du pas (24, 64) et qui comporte un renfort stratifié d'extrados (15b, 55b) et un renfort stratifié d'intrados (15a, 55a), caractérisée en ce que, pour que ladite pale soit réalisable en une seule opération de moulage et polymérisable à chaud, opération durant laquelle le longeron est maintenu en traction, ledit longeron est centré sur l'axe longitudinal (AA) de la pale passant par le centre de la douille d'attache (9,49) et chaque faisceau (10a, 10b; 50) dudit longeron est d'une seule pièce, de section transversale sensiblement rectangulaire et également fixée, dans sa partie logée dans la coque (4, 44) par adhérence de sa face d'intrados directement contre la face interne de la partie en regard du revêtement d'intrados (4a; 44a, 53a) de la coque (4, 44), en ce que ledit remplissage comprend au moins deux corps de remplissage (12a, 12c; 52a, 52b) dont l'un (12a, 52a) est disposé entre le longeron (10a, 10b; 50) et le bord d'attaque (5, 45) et l'autre (12c, 52b) entre le longeron (10a, 10b; 50) et le bord de fuite (6, 46) et en ce que le renfort stratifié d'extrados (15b, 55b) et le renfort stratifié d'intrados (15a, 55a) sont constitués chacun d'un empilement de couches de tissus de fibres à haute résistance, agglomérées par une résine synthétique d'imprégnation, polymérisées, insérées entre le revêtement correspondant (4a, 4b; 44a, 44b, 53a, 54b) et le longeron (10a, 10b; 50) et présentant une épaisseur progressivement croissante en direction de l'embase circulaire (18, 8) avec laquelle ils sont solidarisés par leur extrémité épanouie et des éléments de remplissage.

2. Pale selon la revendication 1, caractérisée en ce que le longeron est réparti en deux faisceaux (10a, 10b) espacés l'un de l'autre dans la coque (4), s'étendant longitudinalement de part et d'autre de l'axe de changement de pas de la pale (AA), et coopérant avec les revêtements d'extrados (4b) et d'intrados (4a) en formant un triple caisson de torsion, le remplissage étant constitué de trois corps de remplissage dont l'un (12b) est disposé entre les deux faisceaux (10a, 10b) du longeron et entre les revêtements d'intrados (4a) et d'extrados (4b) de la coque, dont un second (12a) est un corps de remplissage de bord d'attaque, logé à l'avant du faisceau avant (10a) du longeron, et dont le troisième (12c) est un corps de remplissage de bord de fuite, logé à l'arrière du faisceau arrière (10b) du longeron.

3. Pale selon la revendication 2, caractérisée en ce que les trois corps de remplissage (12a, 12b, 12c) sont en une matière synthétique légère, cellulaire ou en mousse.

4. Pale selon l'une des revendications 2 et 3, caractérisée en ce que le corps de remplissage de bord d'attaque (12a) est renforcé à l'avant par un faisceau de fibres de renforcement (13) aggloméré par une résine synthétique polymérisée et s'étendant longitudinalement et directement adjacent aux revêtements d'intrados (4a) et d'extrados (4b), au niveau du bord d'attaque (5).

5. Pale selon la revendication 4, caractérisée en ce que le faisceau (13) de fibres de renforcement est constitué de mèches de carbone.

6. Pale selon l'une des revendications 2 à 5, caractérisée en ce que la coque (4) est stratifiée et comprend, de l'intérieur vers l'extérieur, deux nappes superposées de fibres de carbone imprégnées d'une résine synthétique polymérisée, une couche de tissu de fibres aramides, dont les fils de chaîne et de trame sont sensiblement inclinés de 45° sur l'axe longitudinal de la pale, et un film de colle assurant un bon état de surface externe de la coque (4) moulée.

7. Pale selon l'une quelconque des revendications 1 à 6, caractérisée en ce que l'embase circulaire du pied de pale (3) est constituée par une bride radiale circulaire (18) de solidarisation à l'organe de commande du pas (24), formée par une pluralité de couches (21) radiales de tissus de fibres de verre accolées les unes aux autres et agglomérées par une résine synthétique d'imprégnation polymérisée, et en ce que les renforts stratifiés d'extrados (15b) et d'intrados (15a) de la zone de transition (14) entre la partie courante (1) de la pale et ladite bride radiale circulaire (18) se partagent, à partir d'une zone de subdivision (17a, 17b), chacun en deux parties, dont l'une, radiale interne (16a1-16a2, 16b1-16b2) reste accolée au longeron (10a, 10b) jusqu'à la bride radiale d'extrémité (18) et dont l'autre, radiale externe (16a3-16a4, 16b3-16b4) reste accolée au revêtement correspondant (4a, 4b) jusqu'à la bride (18), contre laquelle les couches de la partie externe de chaque renfort (15a, 15b) sont dirigées radialement, afin de former un collet radial (20a, 20b) de liaison à la bride (18), les parties interne (16a1-16a2, 16b1-16b2) et externe (16a3-16a4, 16b3-16b4) de chaque renfort (15a, 15b) étant séparées l'une de l'autre par un élément de remplissage synthétique (19a, 19b) tel qu'une mousse de polyuréthane d'épaisseur décroissant progressivement jusqu'à la bride (18).

8. Pale selon la revendication 7, caractérisée en ce que dans la bride de liaison (18) du pied de pale (3) à l'organe (24) de commande du pas sont retenues, perpendiculairement au plan de la bride, sous forme d'inserts, des extrémités d'organes, tels que des boulons (22), de fixation mécanique d'un palier équipé de l'organe de commande du pas (24) au pied de pale (3).

9. Pale selon les revendications 7 ou 8, caractérisée en ce que la bride (18) de liaison du pied de pale (3) présente, du côté tourné vers la douille d'attache (9), un évidement central dans lequel est logé un joint d'étanchéité (23) traversé par une partie frettée (11a, 11b) du longeron, dans laquelle les deux faisceaux (10a, 10b) sont resserrés l'un vers l'autre.

10. Pale selon l'une des revendications 7 à 9, caractérisée en ce que l'organe de commande du pas de la pale est un palier métallique (24) d'encastrement et de guidage en rotation de la pale sur le moyeu, le palier (24) étant conformé en manchon traversé axialement par la partie d'emplanture (8) du longeron, et qui porte, en saillie radiale par rapport à son axe et dirigé axialement vers la douille d'attache (9), un doigt (27) de commande du pas, l'extrémité axiale du manchon du côté opposé à la douille (9) présentant une bride radiale (28), par laquelle le palier (24) est solidarisé au pied de pale (3).

11. Pale selon la revendication 10, caractérisée en ce que l'extrémité axiale du palier (24) du côté de la douille (9) présente également une bride radiale (25), chacune des deux brides d'extrémité (28, 25) du palier (24) ayant, à sa périphérie, une portée circulaire (29, 26) centrée sur l'axe longitudinal (AA) de la pale et par laquelle le palier (24) est destiné à être monté en rotation dans l'une de deux ouvertures correspondantes ménagées dans des parties du moyeu radialement espacées l'une de l'autre.

12. Pale selon la revendication 1, caractérisée :
- en ce que la partie du longeron reçue dans la coque (44) est un unique faisceau (50) longitudinal, massif et sensiblement plat, reliant l'un à l'autre les revêtements d'intrados et d'extrados, qui comportent chacun une peau externe 44a, 44b) renforcée intérieurement, à partir du bord d'attaque (45), et jusqu'au-delà du longeron (50), en direction du bord de fuite (46), par une semelle de rigidification (53a, 53b) de la pale en battement, chaque semelle étant stratifiée et constituée de nappes longitudinales de fibres unidirectionnelles de carbone agglomérées par une résine synthétique d'imprégnation polymérisée assurant la liaison par adhérence des faces d'intrados et d'extrados du longeron (50) directement contre les faces internes des semelles correspondantes (53a, 53b),
- en ce que les deux corps de remplissage (52a, 52b) logés dans la coque (44) et de part et d'autre du longeron (50) sont également constitués chacun de nappes longitudinales de fibres unidirectionnelles de carbone agglomérées par une résine synthétique d'imprégnation polymérisée,
- en ce que la peau (44a, 44b) de chaque revêtement est stratifée et constituée, de l'intérieur vers l'extérieur, de deux couches de tissu de fibres aramides dont les fils de chaîne et de trame sont croisés d'une couche à l'autre et inclinés à sensiblement 45° par rapport au bord d'attaque (45), et d'un film de colle assurant un bon état de surface externe de la coque (44) moulée.

13. Pale selon la revendication 12, caractérisée en ce que l'embase circulaire du pied de pale est conformée en embout tubulaire (58) tronconique, à petite base tournée vers la douille (49), et, de l'autre côté, une partie de transition (54) qui relie l'embout (58) à la partie courante (41) de la pale et qui présente une épaisseur progressivement croissante de ladite partie courante à l'embout, auquel elle se raccorde au niveau du bord radial interne d'une butée radiale annulaire (61) formée d'un empilement de couches radiales de tissu de fibres de verre agglomérées par une résine synthétique d'imprégnation polymérisée, et qui ferme une manchette tronconique et périphérique (62) de l'embout (58), également constituée en tissu de fibres de verre, au niveau de sa grande base, les extrémités des revêtements (44a, 44b, 53a, 53b) de la coque (44) dans la partie de transition (54) recouvrant une frette (56) également constituée en tissu de fibres de verre, qui enserre la portion (51a, 51b) du longeron (48, 50) traversant le pied de pale (43), et qui présente une épaisseur progressivement croissante de la partie courante (41) de la pale à l'embout (58), et se prolonge à l'intérieur de ce dernier en traversant le passage central de sa butée annulaire (61), jusqu'à un joint d'étanchéité (63) interne à l'embout (58) et traversé par le longeron (48, 50).

14. Pale selon la revendication 13, caractérisée en ce que le joint d'étanchéité (63) est entouré dans l'embout (58) par les parties d'extrémité interne (55a, 55b) des nappes de carbone des deux corps de remplissage (52a, 52b) et/ou des semelles (53a, 53b), qui se séparent des peaux (44a, 44b) des revêtements au niveau de la butée radiale (62) de l'embout (58) et entourent la frette (56) dans sa partie engagée dans l'embout (58), le centrage du joint d'étanchéité (63) dans l'embout (58) étant également assuré par au moins un corps complémentaire de remplissage en mousse de polyuréthane (59a, 59b) qui est logé contre la butée radiale (61) et contre la face interne de la manchette (62) de l'embout, dans sensiblement la moitié de ce dernier du côté de la partie de transition (54), et qui est intérieurement doublé par lesdites parties d'extrémité (55a, 55b) des nappes de carbone, lesquelles doublent intérieurement la manchette (62) dans sensiblement sa moitié du côté de la douille d'attache (49).

15. Pale selon l'une des revendications 13 et 14, caractérisée en ce que l'organe de commande du pas de la pale est un palier métallique (64) d'encastrement et de guidage en rotation de la pale sur le moyeu, ledit palier étant agencé en fût tubulaire traversé par la partie d'emplanture (48) du longeron et comprenant, du côté opposé à la douille d'attache (49), un tronçon de forme tronconique (64c) à petite base tournée vers la douille (49), par lequel le palier (64) est fixé par emmanchement conique et interposition d'un film de colle sur l'embout tubulaire (58) du pied de pale (43), le fût (64) comprenant également, du côté de la douille (49), un tronçon sensiblement cylindrique (64a), de plus petit diamètre que le tronçon tronconique (64c), qui se raccorde à ce dernier par un évasement central (64b) sensiblement tronconique, et qui porte en saillie radiale par rapport à son axe un levier de commande de pas (67).

16. Pale selon la revendication 15, caractérisée en ce que les extrémités axiales du fût (64) sont chacune entourées par une bague (65, 68) frettée sur le fût, qui est destiné à être monté tourillonnant autour de son axe sur deux parties (71, 72) radialement écartées l'une de l'autre d'un moyeu, et dont chacune présente l'une de deux ouvertures circulaire coaxiales dans lesquelles les bagues frettées (65, 68) du fût (64) sont montées en rotation.

17. Pale selon la revendication 16, caractérisée en ce que chaque bague frettée (65, 68) présente une portée périphérique cylindrique (66, 69) constituée par un revêtement en céramique destiné à allonger la durée de vie de la bague.

18. Pale selon l'une des revendications 16 et 17, caractérisée en ce qu'elle comprend une masse d'équilibrage (70) constituée par un fil métallique, de densité élevée, noyé dans une résine synthétique logée dans une cavité aménagée sous l'extrémité, située du côté de la douille (49), de la bague (68) à l'extrémité opposée à la douille (49) sur le fût (64).

19. Pale selon l'une des revendications 1 à 18, caractérisée en ce que le longeron est constitué d'un écheveau de stratifils unidirectionnels, de préférence de fibres aramides, qui est replié sur lui-même en deux moitiés sensiblement égales dont les parties voisines de la zone de pliage constituent les deux faisceaux (8a, 8b) de la partie d'emplanture (8) en forme de boucle qui entoure la douille d'attache (9), alors que les parties des moitiés qui sont éloignées de la zone de pliage constituent la partie du longeron (10a-10b, 50) reçue dans la coque (4, 44).

20. Pale selon la revendication 19, telle que rattachée à l'une des revendications 1 à 11, caractérisée en ce que les deux faisceaux de stratifils du longeron sont frettés dans leurs portions (11a, 11b) traversant le pied de pale (3), entre la partie d'emplanture en bouche (8) et les parties des moitiés qui sont engagées et maintenues écartées l'une de l'autre dans la coque (4) de façon à former chacune l'un des deux faisceaux (10a, 10b) du longeron.

21. Pale selon la revendication 19, telle que rattachée à l'une des revendications 12 à 17, caractérisée en ce que les deux faisceaux de stratifis du longeron sont frettés l'un contre l'autre par leurs portions (51a, 51b) traversant le pied de pale (43), entre la partie d'emplanture en boucle (48) et les parties des moitiés qui sont engagées et maintenues appliquées l'une contre l'autre dans la coque (44) de façon à former l'unique faisceau (50) du longeron.

22. Pale selon l'une des revendications 19 à 21, caractérisée en ce que chaque faisceau de stratifils du longeron présente, dans sa partie d'emplanture en boucle (8), une épaisseur, mesurée parallèlement à l'axe de la douille d'attache (49), qui augmente progressivement du pied de pale (3) à la douille (9), et qui présente, perpendiculairement aux axes de la douille (49) et de la pale (AA), une largeur qui diminue progressivement du pied de pale (3) à la douille (9).

23. Pale selon l'une des revendications 1 à 21, caractérisée en ce qu'elle comprend de plus une coiffe (7) rigide de protection du bord d'attaque (5) intégrée a la coque (4) et en titane ou en polyuréthane moulé.

24. Procédé de fabrication d'une pale selon l'une des revendications 1 à 23, au moyen d'un demi-moule inférieur (31) et d'un demi-moule supérieur (32) dont les empreintes complémentaires ont respectivement la forme de la partie d'intrados et de la partie d'extrados de la pale, consistant :
- à déposer dans le demi-moule inférieur (31), un volet de chacune des couches de tissu et nappes de fibres à haute résistance mécanique imprégnées d'une résine synthétique polymérisable, et destinées à constituer le revêtement d'intrados (4a, 44a) de la coque de la pale,
- à mettre en place, par-dessus ces volets, les matériaux constitutifs des corps de remplissage (12a à 12c) ou (52a, 52b), et, dans la zone du pied de pale (3, 43), les couches de tissu (15a, 15b) et/ou nappes de fibres (55a, 55b) de renfort imprégnées d'une résine synthétique polymérisable de la partie d'intrados de la coque (4, 44),
- à mettre en place, par-dessus ces volets, et couches de tissu et/ou nappes de fibres de renfort de la partie d'intrados de la pale, et entre ces corps de remplissage, les parties d'extrémité, destinées à être fixées dans la coque, les deux faisceaux d'un écheveau allongé et replié en boucle sur lui-même, constitué de stratifils de fibres aramides agglomérées par une résine synthétique polymérisable, et qui est destiné à former le longeron (8, 10a, 10b) ou (48, 50) de la pale, et en disposant, au-delà d'une extrémité correspondante desdits volets, couches de tissus et/ou nappes de fibres de renfort et corps de remplissage, les parties des deux faisceaux qui sont voisines de la zone de pliage de manière à former la boucle (8), destinée à constituer une partie d'emplanture du longeron, et qui entoure une douille métallique (9, 49) disposée dans le demi-moule inférieur (31),
- à mettre en place, dans la zone du pied de pale (3, 43) et par-dessus le longeron (8, 10a, 10b) ou (48, 50) les couches de tissu et/ou nappes de fibres de renfort (15b, 55b) imprégnées d'une résine synthétique polymérisable de la partie d'extrados de la coque (4, 44),
- à disposer sur l'ensemble ainsi formé dans le demi-moule inférieur (31), un volet de chacune des couches de tissu et nappes de fibres à haute résistance mécanique imprégnées d'une résine synthétique polymérisable qui sont destinées à constituer le revêtement d'extrados (4b, 44b) de la coque (4, 44), et
- à mettre en place les couches de tissu de la frette (56) des butée (61) et manchette (62) ou de la bride radiale (18) du pied de pale (3, 43), et les éléments complémentaires de remplissage en mousse de polyuréthane (19a, 19b, 69a, 69b) dans les parties d'intrados et d'extrados de la pale, respectivement avant et après la mise en place de l'écheveau de stratifils du longeron,
- à placer, le demi-moule supérieur (32) sur le demi-moule inférieur (31) et à fermer le moule puis à polymériser la ou les résines imprégnant et/ou agglomérant les éléments renfermés dans le moule, de manière à mouler la pale en une seule opération, caractérisé en ce qu'il consiste, avant la polymérisation, à mettre les stratifils des deux faisceaux de l'écheveau du longeron en traction longitudinale, sensiblement parallèlement à l'axe (AA) longitudinal de la pale, et à maintenir cette mise en traction des stratifils pendant toute la durée de la polymérisation.

25. Procédé selon la revendication 24, caractérisé en ce qu'il consiste à enrouler, pour constituer le longeron, un écheveau de stratifils formant une boucle fermée et allongée (38), et à disposer cet écheveau dans le moule (31, 32) de sorte que la partie d'extrémité du côté opposé à celle qui entoure la douille d'attache (9), s'étende longitudinalement en saillie au-delà des empreintes des demi-moules (31, 32) et entoure une douille de tension (39) retenue sur un pion (39') monté sur l'un au moins des demi-moules (31, 32) et en ce qu'il consiste également après polymérisation et démoulage, à découper la partie excédentaire du longeron avec, éventuellement, une partie du bout de la coque (4) et des corps de remplissage (12a à 12b).

26. Procédé selon l'une des revendications 24 ou 25, caractérisé en ce qu'il consiste initialement à étendre un film de colle dans les parties des empreintes des demi-moules (31, 32) correspondant à la coque (4, 44) de la pale, afin d'obtenir un bon état de surface de la coque en sortie de moulage.

## Claims

1. Blade essentially of composite materials, particularly for a multi-blade propeller with variable pitch and with individually removable blades, for use in particular as the tail rotor, preferably provided with a fairing, of a rotary wing aircraft such as a helicopter, comprising:
- a shell (4, 44) with an aerodynamic profile, having a low pressure face covering (4b, 44b) and a high pressure face covering (4a, 44a) which extend from the leading edge (5, 45) to the trailing edge (6,46) of the blade and along which trailing edge they are connected to each other, the shell (4, 44) comprising at least one layer of fabric of high mechanical strength fibres bonded by a polymerised synthetic impregnating resin, and having an inner end formed into a blade shank (3, 43),
- a spar (8, 10a, 10b; 48, 50) with a longitudinal axis substantially parallel to that of the blade, and comprising at least one elongate bundle (10a, 10b; 50) of high mechanical strength fibre rovings bonded by a polymerised synthetic resin, the largest portion of which is housed in the shell (4, 44) and fixed by adhesion of its low pressure face surface directly against the inner face of the opposite portion of the low pressure face covering (4b, 44b) of the shell, and an inner end portion of which, emerging from the shell (4, 44) and passing through the blade shank (3, 43), forms a root portion (8, 48) flexible in twisting and bending, arranged in a loop that surrounds, with its inner end, a single attachment socket (9, 49), by which the blade is designed to be individually attached to a hub,
- a filling (12a, 12b, 12c; 52a, 52b) arranged in the shell (4, 44), between the latter and the spar (8, 10a, 10b; 48, 50), and
- a member (24, 64) for controlling the pitch of the blade, which member is rigidly connected to the blade shank (3, 43) and designed to be mounted in rotation on the hub about the longitudinal axis of the blade, and to exert on the shell (4, 44) a twisting moment substantially centred on the longitudinal axis of the spar,
- a transition zone (14, 54) which progressively connects the aerodynamically profiled running portion (1, 41) of the blade to a circular footing (18, 58) for connection to the pitch control member (24, 64) and which comprises a laminated low pressure face reinforcement (15b, 55b) and a laminated high pressure face reinforcement (15a, 55a), characterised in that, in order that the said blade can be produced in a single moulding operation and is heat-polymerisable, during which operation the spar is maintained in tension, the said spar is centred on the longitudinal axis (AA) of the blade passing through the centre of the attachment socket (9, 49) and each bundle (10a, 10b; 50) of the said spar is in one piece, having a substantially rectangular cross-section and also fixed, in its portion housed in the shell (4, 44), by adhesion of its high pressure face surface directly to the inner face of the opposite portion of the high pressure face covering (4a; 44a, 53a) of the shell (4, 44), in that the said filling comprises at least two filling bodies (12a, 12c; 52a, 52b), one of which (12a, 52a) is arranged between the spar (10a, 10b; 50) and the leading edge (5, 45), and the other (12c, 52b) between the spar (10a, 10b; 50) and the trailing edge (6, 46), and in that the laminated low pressure face reinforcement (15b, 55b) and the laminated high pressure face reinforcement (15a, 55a) are each formed of a stack of layers of fabric of high strength fibres, bonded by a synthetic impregnating resin and polymerised, inserted between the corresponding covering (4a, 4b; 44a, 44b, 53a, 53b) and the spar (10a, 10b; 50) and having a thickness increasing progressively in the direction of the circular footing (18, 8) to which they are rigidly connected by their flared end and filler members.

2. Blade according to claim 1, characterised in that the spar is divided into two bundles (10a, 10b), spaced apart from each other in the shell (4), extending longitudinally on either side of the blade pitch change axis (AA), and co-acting with the low pressure face covering (4b) and the high pressure face covering (4a) to form a triple torsion box, the filling being constituted by three filling bodies, one of which (12b) is arranged between the two bundles (10a, 10b) of the spar and between the high pressure face covering (4a) and the low pressure face covering (4b) of the shell, a second one of which (12a) is a leading edge filling body, housed at the front of the front bundle (10a) of the spar, and the third one of which (12c) is a trailing edge filling body, housed at the rear of the rear bundle (10b) of the spar.

3. Blade according to claim 2, characterised in that the three filling bodies (12a, 12b, 12c) are of a light, cellular or foam synthetic material.

4. Blade according to one of Claims 2 and 3, characterised in that the leading edge filling body (12a) is reinforced at the front by a bundle of reinforcing fibres (13) bonded by a polymerised synthetic resin and extending longitudinally and directly adjacent to the high pressure face covering (4a) and the low pressure face covering (4b), at the leading edge (5).

5. Blade according to claim 4, characterised in that the bundle (13) of reinforcing fibres is composed of strands of carbon.

6. Blade according to one of Claims 2 to 5, characterised in that the shell (4) is laminated and comprises, from inside to outside, two superposed sheets of carbon fibres impregnated with a polymerised synthetic resin, a layer of aramide fibre fabric, the warp and weft threads of which are substantially inclined at an angle of 45° to the longitudinal axis of the blade, and a film of adhesive giving a good outer surface finish to the moulded shell (4).

7. Blade according to any one of claims 1 to 6, characterised in that the circular footing of the blade shank (3) consists of a circular radial flange (18), for securing to the pitch control member (24), formed by a plurality of radial layers (21) of glass fibre cloth attached to one another and bonded by a polymerised synthetic impregnating resin, and in that the laminated reinforcements of the low pressure face (15b) and of the high pressure face (15a) of the transition zone (14) between the running portion (1) of the blade and the said circular radial flange (18) are each divided, starting from an area of subdivision (17a, 17b), into two portions, of which one, the inner radial portion (16a1-16a2, 16b1-16b2) remains attached to the spar (10a, 10b) up to the radial end flange (18), and the other, the outer radial portion (16a3-16a4, 16b3-16b4) remains attached to the corresponding covering (4a, 4b) up to the flange (18), against which the layers of the outer portion of each reinforcement (15a, 15b) are radially directed in order to form a radial collar (20a, 20b) for connection to the flange (18), the inner (16a1-16a2, 16b1-16b2) and outer (16a3-16a4, 16b3-16b4) portions of each reinforcement (15a, 15b) being separated from one another by a synthetic filling element (19a, 19b) such as a polyurethane foam, progressively increasing in thickness up to the flange (18).

8. Blade according to claim 7, characterised in that in the flange (18) for connecting the blade shank (3) to the pitch control member (24) there are retained, perpendicularly to the plane of the flange, in the form of inserts, ends of members, such as bolts (22), for mechanically fixing a bearing equipped with the pitch control member (24) to the blade shank (3).

9. Blade according to Claim 7 or 8, characterised in that the flange (18) for connecting the blade shank (3) has on the side facing towards the attachment socket (9) a central cavity in which is housed a seal (23), traversed by a compressed portion (11a, 11b) of the spar, in which the two bundles (10a, 10b) are drawn towards each other.

10. Blade according to one of claims 7 to 9, characterised in that the member for controlling the pitch of the blade is a metallic bearing (24) for fitting the blade on the hub and guiding it in rotation thereon, the bearing (24) being formed into a sleeve axially traversed by the root portion (8) of the spar, and which bears, projecting radially in relation to its axis and orientated axially towards the attachment socket (9), a pitch control finger (27), the axial end of the sleeve on the opposite side to the socket (9) having a radial flange (28) by means of which the bearing (24) is rigidly connected to the blade shank (3).

11. Blade according to claim 10, characterised in that the axial end of the bearing (24) nearest the socket (9) also has a radial flange (25), each of the two end flanges (28, 25) of the bearing (24) having, on its periphery, a circular journal (29, 26) centred on the longitudinal axis (AA) of the blade and by which the bearing (24) is designed to be mounted in rotation in one of two corresponding openings provided in parts of the hub that are radially spaced from one another.

12. Blade according to Claim 1, characterised in that:
- the portion of the spar received in the shell (44) is a single longitudinal bundle (50), solid and substantially flat, connecting to each other the high pressure face and low pressure face coverings which each comprise an outer skin (44a, 44b) reinforced internally from the leading edge (45) and to a point beyond the spar (50), in the direction of the trailing edge (46), by a sole (53a, 53b) for rigidifying the blade under flapping conditions, each sole being laminated and composed of longitudinal sheets of unidirectional carbon fibres bonded by a polymerised synthetic impregnating resin providing the connection by adhesion of the high pressure face and low pressure face of the spar (50) directly to the inner faces of the corresponding soles (53a, 53b),
- the two filling bodies (52a, 52b) housed in the shell (44) and on either side of the spar (50) are also each composed of longitudinal sheets of unidirectional carbon fibres bonded by a polymerised synthetic impregnating resin,
- the skin (44a, 44b) of each covering is laminated and composed, from inside to outside, of two layers of aramide fibre fabric, the warp and weft threads of which are crossed from one layer to the other and inclined substantially at 45° in relation to the leading edge (45), and of a film of adhesive giving a good outer surface finish to the moulded shell (44).

13. Blade according to Claim 12, characterised in that the circular footing of the blade shank is shaped to form a frustoconical tubular end piece (58), having its small base turned towards the socket (49) and, on the other side, a transition portion (54) which connects the end piece (58) to the running portion (41) of the blade and which has a progressively increasing thickness from the said running portion to the end piece, to which it is connected at the inner radial edge of an annular radial abutment (61) formed by a stack of radial layers of glass fibre cloth bonded by a polymerised synthetic impregnating resin, and which closes a frustoconical, peripheral stub sleeve (62) of the end piece (58), also composed of glass fibre cloth, in the region of its large base, the ends of the coverings (44a, 44b, 53a, 53b) of the shell (44) in the transition portion (54) covering a band (56) also composed of glass fibre cloth, which confines the portion (51a, 51b) of the spar (48, 50) traversing the blade shank (43), and which has a thickness that increases progressively from the running portion (41) of the blade to the end piece (58), and extends inside the latter, traversing the central passage of its annular abutment (61) up to a seal (63) internal to the end piece (58) and traversed by the spar (48, 50).

14. Blade according to claim 13, characterised in that the seal (63) is surrounded in the end piece (58) by the inner end portions (55a, 55b) of the carbon sheets of the two filling bodies (52a, 52b) and/or the soles (53a, 53b), which are separated from the skins (44a, 44b) of the coverings at the radial abutment (61) of the end piece (58) and surround the band (56) in the portion thereof which is engaged in the end piece (58), the centring of the seal (63) in the end piece (58) also being effected by at least one complementary filling body (59a, 59b) of polyurethane foam which is housed against the radial abutment (61) and against the inner face of the stub sleeve (62) of the end piece, in substantially the half of the latter nearer the transition portion (54), and which is lined internally by the said end portions (55a, 55b) of the carbon sheets, which line the stub sleeve (62) internally substantially in the half nearer the attachment socket (49).

15. Blade according to one of claims 13 and 14, characterised in that the member for controlling the pitch of the blade is a metallic bearing (64) for fitting the blade on the hub and guiding it in rotation thereon, the said bearing being arranged as a tubular barrel traversed by the root portion (48) of the spar and including, on the opposite side to the attachment socket (49), a section of frustoconical shape (64c) having its small base turned towards the socket (49), by which section the bearing (64) is fixed by a tapered fit and the interposition of a film of adhesive, on the tubular end piece (58) of the blade shank (43), the barrel (64) also including, towards the socket (49), a substantially cylindrical section (64a), smaller in diameter than the frustoconical section (64c), which is connected to the latter by a substantially frustoconical central flared portion (64b), and which bears, projecting radially in relation to its axis, a pitch control lever (67).

16. Blade according to claim 15, characterised in that the axial ends of the barrel (64) are each surrounded by a ring (65, 68) shrunk onto the barrel, which is designed to be mounted so as to journal about its axis on two portions (71, 72), radially separated from each other, of a hub, and each of which has one of two coaxial circular openings in which the shrunk-on rings (65, 68) of the barrel (64) are mounted in rotation.

17. Blade according to claim 16, characterised in that each shrunk-on ring (65, 68) has a cylindrical peripheral journal (66, 69) formed by a ceramic coating intended to increase the life of the ring.

18. Blade according to one of claims 16 and 17, characterised in that it comprises a balancing weight (70) formed by a metallic wire, of high density, embedded in a synthetic resin lodged in a cavity provided under the end, nearest to the socket (49), of the ring (68) at the opposite end to the socket (49) on the barrel (64).

19. Blade according to one of claims 1 to 18, characterised in that the spar is formed by a skein of unidirectional rovings, preferably of aramide fibres, which is folded back on itself in two substantially equal halves, the portions thereof which are in the vicinity of the folding area forming the two bundles (8a, 8b) of the root portion (8) in the form of a loop that passes round the attachment socket (9), while the portions of the halves that are remote from the folding area form the portion of the spar (10a-10b, 50) received in the shell (4, 44).

20. Blade according to claim 19, as dependent on one of claims 1 to 11, characterised in that the two bundles of rovings of the spar are pressed against one another in their portions (11a, 11b) traversing the blade shank (3), between the looped root portion (8) and the portions of the halves that are engaged and held apart from each other in the shell (4) so that each forms one of the two bundles (10a, 10b) of the spar.

21. Blade according to Claim 19, as dependent on one of claims 12 to 17, characterised in that the two bundles of rovings of the spar are pressed against each other by their portions (51a, 51b) traversing the blade shank (43), between the looped root portion (48) and the portions of the halves that are engaged and held applied against each other in the shell (44) so as to form the single bundle (50) of the spar.

22. Blade according to one of claims 19 to 21, characterised in that each bundle of rovings of the spar has in its looped root portion (8) a thickness, measured parallel to the axis of the attachment socket (49), which increases progressively from the blade shank (3) to the socket (9), and which has, perpendicular to the axes of the socket (49) and of the blade (AA), a width that decreases progressively from the blade shank (3) to the socket (9).

23. Blade according to one of claims 1 to 21, characterised in that it additionally comprises a rigid cap (7) for protecting the leading edge (5), which cap is integrated with the shell (4) and is made of titanium or moulded polyurethane.

24. Process for manufacturing a blade according to one of claims 1 to 23, by means of a lower half-mould (31) and an upper half-mould (32), the complementary impressions of which have respectively the shape of the high pressure face portion and of the low pressure face portion of the blade, consisting in:
- depositing in the lower half-mould (31) a panel of each of the layers of fabric and sheets of high mechanical strength fibres impregnated with a polymerisable synthetic resin, and designed to form the high pressure face covering (4a, 44a) of the shell of the blade,
- placing in position, over these panels, the materials that form the filling bodies (12a to 12c) or (52a, 52b) and, in the area of the blade shank (3, 43), the layers of fabric (15a, 15b) and/or sheets of reinforcing fibres (55a, 55b), impregnated with a polymerisable synthetic resin, of the high pressure face portion of the shell (4, 44),
- placing in position, above these panels and layers of fabric and/or sheets of fibres for reinforcing the high pressure face portion of the blade, and between the filling bodies, the end portions, designed to be fixed in the shell, of the two bundles of an elongate skein, folded back on itself in a loop, formed by rovings of aramide fibres bonded by a polymerisable synthetic resin, and which is designed to form the spar (8, 10a, 10b) or (48, 50) of the blade, and in arranging, beyond a corresponding end of the said panels, layers of fabric and/or sheets of reinforcing fibres and filling bodies, the portions of the two bundles which are in the vicinity of the folding area so as to form the loop (8), designed to form a root portion of the spar, and which passes round a metallic socket (9, 49) placed in the lower half-mould (31),
- placing in position, in the area of the blade shank (3, 43) and over the spar (8, 10a, 10b) or (48, 50) the layers of fabric and/or sheets of reinforcing fibres (15b, 55b), impregnated with a polymerisable synthetic resin, of the low pressure face portion of the shell (4, 44),
- arranging on the whole thus formed in the lower half-mould (31) a panel of each of the layers of fabric and sheets of high mechanical strength fibres impregnated with a polymerisable synthetic resin which are designed to form the low pressure face covering (4b, 44b) of the shell (4, 44), and
- placing in position the layers of fabric of the band (56) of the abutment (61) and stub sleeve (62) or of the radial flange (18) of the blade shank (3, 43), and the complementary filling elements of polyurethane foam (19a, 19b, 69a, 69b) in the high pressure face portion and the low pressure face portion of the blade, respectively before and after the placing in position of the skein of rovings of the spar,
- placing the upper half-mould (32) on the lower half-mould (31) and closing the mould, then polymerising the resin or resins impregnating and/or bonding the elements enclosed in the mould, so as to mould the blade in a single operation, characterised in that it consists, prior to polymerisation, in placing the rovings of the two bundles of the skein of the spar in longitudinal tension, substantially parallel to the longitudinal axis (AA) of the blade, and in maintaining this tensioning of the rovings throughout the polymerisation.

25. Process according to claim 24, characterised in that it consists in winding, in order to form the spar, a skein of rovings forming a closed, elongate loop (38), and in arranging this skein in the mould (31, 32) so that the end portion on the opposite side to that surrounding the attachment socket (9) projects longitudinally beyond the impressions of the half-moulds (31, 32) and surrounds a tension socket (39) held on a pin (39') mounted on at least one of the half-moulds (31, 32) and in that it also consists, after polymerisation and removal from the mould, in cutting off the excess portion of the spar, optionally with a portion of the end of the shell (4) and of the filling bodies (12a to 12c).

26. Process according to one of claims 24 or 25, characterised in that it consists initially in spreading a film of adhesive in the portions of the impressions of the half-moulds (31, 32) corresponding to the shell (4, 44) of the blade, in order to obtain a good surface finish to the shell on leaving the mould.

## Patentansprüche

1. Vor allem aus Verbundwerkstoffen bestehendes Rotorblatt, insbesondere für eine mehrblättrige Luftschiraube mit variablem Anstellwinkel und einzeln abnehmbaren Rotorblättern, die besonders als, vorzugsweise stromlinienförmiger, Heckrotor eines Drehflügelflugzeugs, wie z.B. eines Hubschraubers, verwendbar ist, mit:
- einem Mantel (4, 44) mit aerodynamischem Profil, der oberseitige (4b, 44b) und unterseitige (4a, 44a) Verkleidungen aufweist, die sich von der Vorderkante (5, 45) bis zur Hinterkante (6, 46) des Rotorblatts erstrecken und entlang der Hinterkante miteinander fest verbunden sind, wobei der Mantel (4, 44) mindestens eine Gewebeschicht aus Fasern hoher mechanischer Festigkeit enthält, die durch ein polymerisiertes Imprägnier-Kunstharz zusammengebunden sind, und ein als Rotorblattfuß (3, 43) gestaltetes inneres Ende aufweist,
- einem Längsträger (8, 10a, 10b; 48, 50) mit einer zu derjenigen des Rotorblatts im wesentlichen parallelen Längsachse, der mindestens ein langgestrecktes Bündel (10a, 10b; 50) von durch ein polymerisiertes Kunstharz zusammengebundenen Faserschichtungen hoher mechanischer Festigkeit enthält, dessen größter Teil sich im Mantel (4,44) befindet und durch Verklebung seiner Oberseitenfläche direkt an der Innenfläche des gegenüberliegenden Teils der oberseitigen Verkleidung des Mantels (4b, 44b) befestigt ist und von dem ein innerer Endabschnitt, der unter Durchqueren des Rotorblattfußes (3,43) aus dein Mantel (4,44) austritt, einen gegen Verdrehung und Durchfederung biegsamen, als Schleife gestalteten Fußteil (8,48) bildet, die mit ihrem inneren Ende eine einzelne Befestigungshülse (9,49) umgibt, mittels der das Rotorblatt einzeln an einer Nabe befestigbar ist,
- einer im Mantel (4, 44) zwischen diesem letzteren und dem Längsträger (8, 10a, 10b; 48, 50) angeordneten Füllung (12a, 12b, 12c; 52a, 52b),
- einer Einrichtung (24, 64) zur Steuerung des Anstellwinkels des Rotorblatts, die mit dem Rotorblattfuß (3,43) fest verbunden und dazu vorgesehen ist, drehbeweglich um die Längsachse des Rotorblatts auf der Nabe befestigt zu sein und ein im wesentlichen zur Längsachse des Längsträgers zentriertes Drillmoment auf den Mantel (4,44) auszuüben,
- einem Übergangsbereich (14, 54), der den aerodynamisch profilierten, normalen Teil (1, 41) des Rotorblatts stetig an eine kreisförmige Befestigungsfläche (18, 58) zur Verbindung mit der Steuereinrichtung für den Anstellwinkel (24, 64) anbindet und der aus einer oberseitigen, geschichteten Verstärkung (15b, 55b) und einer unterseitigen, geschichteten Verstärkung (15a, 55a) besteht, dadurch gekennzeichnet,
- daß der Längsträger, damit das Rotorblatt in einem einzigen formenden Arbeitsgang realisierbar und unter Wärmeeinwirkung polymerisierbar ist - einem Arbeitsgang, während dem der Längsträger unter Zug gehalten wird -, zur Längsachse (AA) des Rotorblatts zentriert ist, die durch die Mitte der Befestigungshülse (9,49) hindurchgeht, und jedes Bündel (10a, 10b; 50) des Längsträgers aus einem einzigen Stück mit im wesentlichen rechtwinkligen, Querschnitt besteht, das in gleicher Weise mit seinem sich im Mantel (4, 44) befindlichen Abschnitt durch Verklebung seiner Unterseitenfläche direkt an der Innenfläche des gegenüberliegenden Teils der unterseitigen Verkleidung (4a; 44a, 53a) des Mantels (4, 44) befestigt ist,
- daß die Füllung mindestens zwei Füllkörper (12a, 12c; 52a, 52b) enthält, von denen der eine (12a, 52a) zwischen dem Längsträger (10a, 10b; 50) und der Vorderkante (5, 45) und der andere (12c, 52b) zwischen dem Längsträger (10a, 10b; 50) und der Hinterkante (6, 46) angeordnet ist, und
- daß die oberseitige, geschichtete Verstärkung (15b, 55b) und die unterseitige, geschichtete Verstärkung (15a, 55a) jeweils aus einem Stapel von Gewebeschichten aus Fasern hoher mechanischer Festigkeit gebildet sind, die durch ein Imprägnier-Kunstharz zusammengebunden, polymerisiert, zwischen der zugehörigen Verkleidung (4a, 4b; 44a, 44b, 53a, 53b) und dem Längsträger (10a, 10b; 50) eingefügt sind und eine in Richtung der kreisförmigen Befestigungsfläche (18, 8), mit der sie durch ihr erweitertes Ende und die Füllungselemente fest verbunden sind, stetig zunehmende Dicke aufweisen.

2. Rotorblatt nach Anspruch 1, dadurch gekennzeichnet, daß der Längsträger in zwei im Mantel (4) voneinander beabstandet angeordnete Bündel (10a, 10b) aufgeteilt ist, die sich longitudinal beiderseits der Anstellwinkelverstellachse des Rotorblatts (AA) erstrecken und mit den oberseitigen (4b) und unterseitigen (4a) Verkleidungen zusammenwirken, indem sie eine Dreifachtorsionskammer bilden, wobei die Füllung aus drei Füllkörpern gebildet ist, von denen der eine (12b) zwischen den zwei Bündeln (10a, 10b) des Längsträgers und zwischen der unterseitigen (4a) und der oberseitigen (4b) Verkleidung des Mantels angeordnet ist, von denen ein zweiter (12a) ein Vorderkantenfüllkörper ist, der sich an der Vorderseite des vorderen Bündels (10a) des Längsträgers befindet, und von denen der dritte (12c) ein Hinterkantenfüllkörper ist, der sich an der Rückseite des hinteren Bündels (10b) des Längsträgers befindet.

3. Rotorblatt nach Anspruch 2, dadurch gekennzeichnet, daß die drei Füllkörper (12a, 12b, 12c) aus einem leichten, synthetischen, zellularen Material oder aus Schaumstoff bestehen.

4. Rotorblatt nach einem der Ansprüche 2 und 3, dadurch gekennzeichnet, daß der Vorderkantenfüllkörper (12a) an der Vorderseite durch ein Verstärkungsfaserbündel (13) verstärkt ist, das durch ein polymerisiertes Kunstharz zusammengebunden ist und sich longitudinal und direkt an die unterseitige (4a) und die oberseitige (4b) Verkleidung angrenzend auf Höhe der Vorderkante (5) erstreckt.

5. Rotorblatt nach Anspruch 4, dadurch gekennzeichnet, daß das Verstärkungsfaserbündel (13) aus Kohlenstoffbändern gebildet ist.

6. Rotorblatt nach einem der Ansprüche 2 bis 5, dadurch gekennzeichnet, daß der Mantel (4) geschichtet ist und von innen nach außen zwei übereinandergelegte Kohlenstoffaserwicklungen, die mit einem polymerisierten Kunstharz imprägniert sind, eine Gewebeschicht aus Aramidfasern, deren Kett- und Schußfäden im wesentlichen um 45° zur Längsachse des Rotorblatts geneigt sind, und einen Leimfilm enthält, der eine gute Beschaffenheit der Außenfläche des geformten Mantels (4) gewährleistet.

7. Rotorblatt nach einem der Ansprüche 1 bis 6, dadurch gekennzeichnet, daß
- die kreisförmige Befestigungsfläche des Rotorblattfußes (3) von einem kreisförmigen, radialen Flansch (18) zur festen Verbindung mit der Einrichtung zur Steuerung des Anstellwinkels (24) gebildet ist, der aus einer Mehrzahl von radialen Glasfasergewebeschichten (21) besteht, die aneinander angefügt und durch ein polymerisiertes Imprägnier-Kunstharz zusammengebunden sind, und
- sich die geschichteten oberseitigen (15b) und unterseitigen (15a) Verstärkungen des Übergangsbereichs (14) zwischen dem normalen Teil (1) des Rotorblatts und dem kreisförmigen, radialen Flansch (18) von einem Unterteilungsbereich (17a, 17b) an jeweils in zwei Teile aufteilen, von denen der eine, radial innere (16a1-16a2, 16b1-16b2) bis zum radialen Endflansch (18) an dem Längsträger (10a, 10b) angefügt bleibt und von denen der andere, radial äußere (16a3-16a4, 16b3-16b4) bis zu dem Flansch (18), gegen den die Schichten des äußeren Teils jeder Verstärkung (15a, 15b) radial geführt werden, an der entsprechenden Verkleidung (4a, 4b) angefügt bleibt, um einen radialen Verbindungsrand (20a, 20b) mit dem Flansch (18) zu bilden, wobei die inneren (16a1-16a2, 16b1-16b2) und äußeren (16a3-16a4, 16b3-16b4) Teile jeder Verstärkung (15a, 15b) durch ein synthetisches Füllelement (19a, 19b), wie z.B. einen Polyurethan-Schaumstoff, mit zum Flansch (18) hin stetig zunehmender. Dicke voneinander getrennt sind.

8. Rotorblatt nach Anspruch 7, dadurch gekennzeichnet, daß in dem Flansch (18) zur Verbindung des Rotorblattfußes (3) mit der Steuereinrichtung (24) für den Anstellwinkel senkrecht zur Ebene des Flanschs Endelemente in Form von Einsatzstücken, wie z.B. Durchsteckschrauben (22), zur mechanischen Fixierung eines mit der Steuereinrichtung für den Anstellwinkel (24) ausgerüsteten Lagers am Rotorblattfuß (3) gehalten sind.

9. Rotorblatt nach Anspruch 7 oder 8, dadurch gekennzeichnet, daß der Verbindungsflansch (18) des Rotorblattfußes (3) auf der der Befestigungshülse (9) zugewandten Seite eine mittige Aussparung aufweist, in der sich eine Dichtung (23) befindet, die von einem umschnürten Teil (11a, 11b) des Längsträgers durchdrungen ist, in dem die zwei Bündel (10a, 10b) gegeneinander gespannt sind.

10. Rotorblatt nach einem der Ansprüche 7 bis 9, dadurch gekennzeichnet, daß die Einrichtung zur Steuerung des Anstellwinkels des Rotorblatts ein metallisches Lager (24) zum Einbau und zur drehbeweglichen Führung des Rotorblatts auf der Nabe ist, wobei das Lager (24) als Muffe gestaltet ist, die axial vom Fußteil (8) des Längsträgers durchquert wird und bezüglich ihrer Achse radial abgesetzt sowie axial in Richtung der Befestigungshülse (9) weisend einen Zapfen (27) zur Steuerung des Anstellwinkels trägt, wobei das axiale Ende der Muffe auf der der Hülse (9) entgegengesetzten Seite einen radialen Flansch (28) aufweist, durch den das Lager (24) fest mit dem Rotorblattfuß (3) verbunden ist.

11. Rotorblatt nach Anspruch 10, dadurch gekennzeichnet, daß das axiale Ende des Lagers (24) auf der Seite der Hülse (9) ebenfalls einen radialen Flansch (25) aufweist, wobei jeder der zwei Endflansche (28,25) des Lagers (24) an seinem Umfang eine zur Längsachse (AA) des Rotorblatts zentrierte, ringförmige Auflagefläche (29, 26) besitzt, und daß mittels dieser das Lager (24) dazu vorgesehen ist, drehbeweglich in einer von zwei zugehörigen Öffnungen angebracht zu werden, die in radial voneinander beabstandeten Nabenteilen ausgespart sind.

12. Rotorblatt nach Anspruch 1, dadurch gekennzeichnet,
- daß der im Mantel (44) aufgenommene Teil des Längsträgers ein massives, im wesentlichen flaches, einzelnes Längsbündel (50) ist, das die unterseitige und die oberseitige Verkleidung miteinander verbindet, die jeweils eine Außenhaut (44a, 44b) besitzen, die innen von der Vorderkante (45) an in Richtung der Hinterkante (46) bis über den Längsträger (50) hinaus durch eine Platte (53a, 53b) zur Versteifung des Rotorblatts beim Schlagen verstärkt ist, wobei jede Platte geschichtet und aus in einer Richtung laufenden, longitudinalen Kohlenstoffaserwicklungen gebildet ist, die durch ein polymerisiertes Imprägnier-Kunstharz zusammengebunden sind, das die Verbindung der Flächen der Unterseite und der Oberseite des Längsträgers (50) direkt mit den Innenflächen der entsprechenden Platten (53a, 53b) durch Verklebung sicherstellt,
- daß die zwei Füllkörper (52a, 52b), die sich im Mantel (44) und beiderseits des Längsträgers (50) befinden, jeweils auch von in einer Richtung laufenden, longitudinalen Kohlenstoffaserwicklungen gebildet sind, die durch ein polymerisiertes Imprägnier-Kunstharz zusammengebunden sind, und
- daß die Haut (44a, 44b) jeder Verkleidung geschichtet und von innen nach außen aus zwei Gewebeschichten aus Aramidfasern, deren Kett- und Schußfäden von einer Schicht zur anderen überkreuz gearbeitet und im wesentlichen um 45° bezüglich der Vorderkante (45) geneigt sind, sowie einem Leimfilm gebildet ist, der eine gute Beschaffenheit der Außenfläche des geformten Mantels (44) sicherstellt.

13. Rotorblatt nach Anspruch 12, dadurch gekennzeichnet, daß die kreisförmige Befestigungsfläche des Rotorblattfußes als rohrförmiges, kegelstumpfartiges Ansatzstück (58) mit der Hülse (49) zugewandter kleiner Basis gestaltet ist und auf der anderen Seite einen Übergangsbereich (54) bildet, der das Ansatzstück (58) mit den, normalen Teil (41) des Rotorblatts verbindet und der eine vom normalen Teil zum Ansatzstück stetig anwachsende Dicke aufweist, mit dem er sich auf Höhe der radialen Innenkante eines radialen, ringförmigen Anschlages (61) verbindet, der aus einem Stapel radialer Gewebeschichten aus Glasfasern gebildet ist, die durch ein polymerisiertes Imprägnier-Kunstharz zusammengebunden sind, und der eine kegelstumpfartige, umfangsseitige Manschette (62) des Ansatzstücks (58), die auch aus einem Glasfasergewebe gebildet ist, auf Höhe ihrer großen Basis abschließt, wobei die Enden der Verkleidungen (44a, 44b, 53a, 53b) des Mantels (44) im Übergangsbereich (54) eine ebenfalls aus einem Glasfasergewebe gebildete Ringarmierung (56) überdecken, die den Abschnitt (51a, 51b) des Längsträgers (48,50) umfaßt, der den Rotorblattfuß (43) durchquert, und die eine vom normalen Teil (41) des Rotorblatts bis zum Ansatzstück (58) stetig anwachsende Dicke aufweist und sich in das Innere dieses letzteren unter Durchquerung des mittigen Durchgangs seines ringförmigen Anschlages (61) bis zu einer vom Längsträger (48, 50) durchquerten Dichtung (63) im Inneren des Ansatzstücks (58) erstreckt.

14. Rotorblatt nach Anspruch 13, dadurch gekennzeichnet, daß die Dichtung (63) im Ansatzstück (58) von den inneren Endabschnitten (55a, 55b) der Kohlenstoffwicklungen der zwei Füllkörper (52a, 52b) und/oder der Platten (53a, 53b) umgeben ist, die sich von den Häuten (44a, 44b) der Verkleidungen auf Höhe des radialen Anschlages (61) des Ansatzstücks (58) entfernen und die Ringarmierung (56) in ihrem in das Ansatzstück (58) eingreifenden Abschnitt umgeben, wobei die Zentrierung der Dichtung (63) im Ansatzstück (58) auch durch wenigstens einen ergänzenden Füllkörper aus Polyurethan-Schaumstoff (59a, 59b) sichergestellt ist, der gegen den radialen Anschlag (61) und gegen die Innenfläche der Manschette (62) des Ansatzstücks, im wesentlichen entlang der Hälfte dieser letzteren auf der Seite des Übergangsbereichs (54), anliegt und der innenseitig durch die Endabschnitte (55a, 55b) der Kohlenstoffwicklungen verstärkt ist, welche innenseitig die Manschette (62) im wesentlichen entlang ihrer Hälfte auf der Seite der Befestigungshülse (49) verstärken.

15. Rotorblatt nach einem der Ansprüche 13 und 14, dadurch gekennzeichnet, daß die Einrichtung zur Steuerung des Anstellwinkels des Rotorblatts ein metallisches Lager (64) zum Einbau und zur drehbeweglichen Führung des Rotorblatts auf der Nabe ist, wobei das Lager als rohrförmiger Schaft angeordnet ist, der vom Fußteil (48) des Längsträgers durchdrungen ist und auf der der Befestigungshülse (49) entgegengesetzten Seite ein Teilstück von kegelstumpfartiger Form (64c) mit der Hülse (49) zugewandter kleiner Basis beinhaltet, mittels dem das Lager (64) durch konisches Einstecken und Zwischenfügen eines Leimfilms auf das rohrförmige Ansatzstück (58) des Rotorblattfußes (43) befestigt ist, wobei der Schaft (64) auch auf der Seite der Hülse (49) ein im wesentlichen zylindrisches Teilstück (64a) mit geringerem Durchmesser als dem des kegelstumpfartigen Teilstücks (64c) beinhaltet, das mit diesem letzteren durch eine mittige, im wesentlichen kegelstumpfartige Ausweitung (64b) verbunden ist und bezüglich seiner Achse radial abgesetzt einen Hebel zur Steuerung des Anstellwinkels (67) trägt.

16. Rotorblatt nach Anspruch 15, dadurch gekennzeichnet, daß die axialen Enden des Schafts (64) jeweils von einem auf den Schaft aufgezogenen Ring (65, 68) umgeben sind, der dazu vorgesehen ist, laufzapfengeführt um seine Achse rotierend auf zwei radial voneinander beabstandeten Teilen (71,72) einer Nabe angebracht zu werden, von denen jeder eine der zwei koaxialen, kreisförmigen Öffnungen aufweist, in denen die aufgezogenen Ringe (65, 68) des Schafts (64) drehbeweglich angebracht sind.

17. Rotorblatt nach Anspruch 16, dadurch gekennzeichnet, daß jeder aufgezogene Ring (65, 68) eine umfangsseitige, zylindrische Auflagefläche (66, 69) aufweist, die durch eine Verkleidung aus Keramik gebildet ist, die zur Verlängerung der Lebensdauer des Rings vorgesehen ist.

18. Rotorblatt nach einem der Ansprüche 16 und 17, dadurch gekennzeichnet, daß es eine Ausgleichmasse (70) beinhaltet, die von einem metallischen Draht hoher Dichte gebildet ist, der in ein Kunstharz eingelassen ist, das sich in einem Hohlraum befindet, welcher unter dem auf der Seite der Hülse (49) gelegenen Ende des Rings (68) am der Hülse (49) entgegengesetzten Ende auf dem Schaft (64) angeordnet ist.

19. Rotorblatt nach einem der Ansprüche 1 bis 18, dadurch gekennzeichnet, daß der Längsträger aus einem Strang von in einer Richtung laufenden Schichtungen, vorzugsweise aus Aramidfasern, gebildet ist, der in zwei im wesentlichen gleichen Hälften auf sich selbst gefaltet ist, von denen die dem Faltungsbereich benachbarten Abschnitte die zwei Bündel (8a, 8b) des Fußteils (8) in Form einer Schleife bilden, die die Befestigungshülse (9) umgibt, während die vom Faltungsbereich entfernt liegenden hälftigen Abschnitte den im Mantel (4, 44) aufgenommenen Teil des Längsträgers (10a-10b, 50) bilden.

20. Rotorblatt nach Anspruch 19 in Verbindung mit einem der Ansprüche 1 bis 11, dadurch gekennzeichnet, daß die zwei Schichtenbündel des Längsträgers an ihren den Rotorblattfuß (3) durchquerenden Teilen (11a, 11b) zwischen dem schleifenförmigen Fußteil (8) und den hälftigen Abschnitten umschnürt sind, die im Mantel (4) eingefügt und voneinander derart beabstandet gehalten sind, daß jeder eines der zwei Bündel (10a, 10b) des Längsträgers bildet.

21. Rotorblatt nach Anspruch 19 in Verbindung mit einem der Ansprüche 12 bis 17, dadurch gekennzeichnet, daß die zwei Schichtenbündel des Längsträgers durch ihre den Rotorblattfuß (43) durchquerenden Teile (51a, 51b) zwischen dem schleifenförmigen Fußteil (48) und den hälftigen Abschnitten gegeneinanderliegend umschnürt sind, die im Mantel (44) eingefügt und derart gegeneinander gedrückt gehalten sind, daß sie ein einzelnes Bündel (50) des Längsträgers bilden.

22. Rotorblatt nach einem der Ansprüche 19 bis 21, dadurch gekennzeichnet, daß jedes Schichtenbündel des Längsträgers in seinem schleifenförmigen Fußteil (8) eine parallel zur Achse der Befestigungshülse (49) gemessene Dicke aufweist, die vom Rotorblattfuß (3) zur Hülse (9) stetig anwächst, sowie senkrecht zu den Achsen der Hülse (49) und des Rotorblatts (AA) eine Breite aufweist, die vom Rotorblattfuß (3) zur Hülse (9) stetig abnimmt.

23. Rotorblatt nach einem der Ansprüche 1 bis 21, dadurch gekennzeichnet, daß es des weiteren eine steife Kappe (7) zum Schutz der Vorderkante (5) beinhaltet, die im Mantel (4) integriert ist und aus Titan oder aus geformtem Polyurethan besteht.

24. Verfahren zur Herstellung eines Rotorblatts nach einem der Ansprüche 1 bis 23 mit Hilfe einer unteren Formhälfte (31) und einer oberen Formhälfte (32), deren komplementäre Vertiefungen die Form des unterseitigen Teils beziehungsweise des oberseitigen Teils des Rotorblatts aufweisen, bestehend aus:
- dem Einlegen eines Blatteils aus jeder der Gewebeschichten und Faserwicklungen hoher mechanischer Festigkeit, die mit einem polymerisierbaren Kunstharz imprägniert und dazu vorgesehen sind, die unterseitige Verkleidung (4a, 44a) des Rotorblattmantels zu bilden, in die untere Formhälfte (31),
- dem Anordnen der Grundmaterialen für die Füllkörper (12a bis 12c) oder (52a, 52b) über diesen Blatteil und der mit einem polymerisierbaren Kunstharz imprägnierten, verstärkenden Gewebeschichten (15a, 15b) und/oder Faserwicklungen (55a, 55b) des unterseitigen Teils des Mantels (4, 44) im Bereich des Rotorblattfußes (3,43),
- dem Anordnen der im Mantel zu befestigenden Endteile und der zwei Bündel eines langgestreckten und schleifenförmig auf sich selbst zurückgeschlagenen Strangs, der aus durch ein polymierisierbares Kunstharz zusammengebundenen Aramidfaserschichtungen besteht, und der dazu bestimmt ist, den Längsträger (8, 10a, 10b) oder (48,50) des Rotorblatts zu bilden, über diese Blatteile und verstärkenden Gewebeschichten und/oder Faserwicklungen des unterseitigen Teils des Rotorblatts sowie zwischen diese Füllkörper, und zwar unter Anordnung der zwei dem Faltungsbereich benachbarten Bündelteile über ein entsprechendes Ende der Blatteile, verstärkenden Gewebeschichten und/oder Faserwicklungen und Füllkörper hinaus derart, daß die Schleife (8) gebildet wird, die dazu dient, einen Fußteil des Längsträgers zu bilden und die eine in der unteren Formhälfte (31) angeordnete, metallische Hülse (9, 49) umgibt,
- dem Anordnen der mit einem polymerisierbaren Kunstharz imprägnierten, verstärkenden Gewebeschichten und/oder Faserwicklungen (15b, 55b) des oberseitigen Teils des Mantels (4, 44) im Bereich des Rotorblattfußes (3, 43) und über dem Längsträger (8, 10a, 10b) oder (48, 50),
- dem Auflegen eines Blatteils aus jeder der Gewebeschichten und Faserwicklungen hoher mechanischer Festigkeit, die mit einem polymerisierbaren Kunstharz imprägniert und dazu vorgesehen sind, die oberseitige Verkleidung (4b, 44b) des Mantels (4,44) zu bilden, auf den dergestalt in der unteren Formhälfte (31) gebildeten Aufbau,
- dem Anordnen der Gewebeschichten für die Ringarmierung (56) von Ansatz (61) und Manschette (62) oder für den radialen Flansch (18) des Rotorblattfußes (3,43) sowie der ergänzenden Füllelemente aus Polyurethan-Schaumstoff (19a, 19b, 69a, 69b) in den unterseitigen und oberseitigen Teilen des Rotorblatts vor beziehungsweise nach dem Anordnen des Strangs aus Schichtungen des Längsträgers, und
- dem Aufsetzen der oberen Formhälfte (32) auf die untere Formhälfte (31) und dem Schließen der Form, dann dem Polymerisieren des oder der die in der Form enthaltenen Elemente imprägnierenden und/oder zusammenbindenden Harze(s) derart, daß das Rotorblatt in einem einzigen Arbeitsgang geformt wird, dadurch gekennzeichnet, daß
- es darauf beruht, vor der Polymerisierung die Schichtungen der zwei Bündel des Stranges des Längsträgers im wesentlichen parallel zur Längsachse (AA) des Rotorblatts durch longitudinalen Zug zu belasten und diese Zugbelastung der Schichtungen während der gesamten Dauer der Polymerisierung aufrechtzuerhalten.

25. Verfahren nach Anspruch 24, dadurch gekennzeichnet, daß es darauf beruht, zur Bildung des Längsträgers einen eine geschlossene und langgestreckte Schleife (38) bildenden Strang aus Schichtungen zu wickeln und diesen Strang in der Form (31,32) so anzuordnen, daß der Endteil auf der Seite, die derjenigen, die die Befestigungshülse (9) umgibt, entgegengesetzt ist, sich longitudinal über die Vertiefungen der Formhälften (31, 32) hinausragend erstreckt und eine Zughülse (39) umgibt, die auf einem Metallstück (39') gehalten ist, das auf wenigstens einer der Formhälften (31,32) befestigt ist, und dadurch, daß es auch darauf beruht, nach Polymerisierung und Ausformen den überschüssigen Teil des Längsträgers, eventuell mit einem Teil des Endstücks des Mantels (4) und der Füllkörper (12a bis 12b), abzutrennen.

26. Verfahren nach einem der Ansprüche 24 oder 25, dadurch gekennzeichnet, daß es darauf beruht, zunächst einen Leimfilm in den Teilen der Vertiefungen der Formhälften (31, 32), die dein Mantel (4, 44) des Rotorblatts entsprechen, aufzutragen, um eine gute Beschaffenheit der Oberfläche des Mantels am Ende des Formvorgangs zu erreichen.
